(19) Europäisches Patentamt
European Patent Office
Office européen des brevets

(11) **EP 3 996 457 A1**

# EUROPEAN PATENT APPLICATION
published in accordance with Art. 153(4) EPC

(43) Date of publication:
**11.05.2022 Bulletin 2022/19**

(21) Application number: **20846202.8**

(22) Date of filing: **24.07.2020**

(51) International Patent Classification (IPC):
**H04W 74/00** (2009.01)   **H04W 74/08** (2009.01)
**H04L 1/00** (2006.01)

(52) Cooperative Patent Classification (CPC):
**H04L 1/00; H04W 74/00; H04W 74/08**

(86) International application number:
**PCT/KR2020/009808**

(87) International publication number:
**WO 2021/020822 (04.02.2021 Gazette 2021/05)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority:   **31.07.2019   KR 20190093367**
**25.10.2019   KR 20190134099**

(71) Applicant: **Samsung Electronics Co., Ltd.**
**Gyeonggi-do, 16677 (KR)**

(72) Inventors:
• **JANG, Jaehyuk**
**Suwon-si, Gyeonggi-do 16677 (KR)**
• **AGIWAL, Anil**
**Suwon-si, Gyeonggi-do 16677 (KR)**

(74) Representative: **HGF**
**HGF Limited**
**1 City Walk**
**Leeds LS11 9DX (GB)**

(54) **METHOD AND APPARATUS FOR PERFORMING 2-STEP RANDOM ACCESS PROCEDURE IN WIRELESS COMMUNICATION SYSTEM**

(57)   The present disclosure provides a method, performed by a user equipment (UE), of performing a random access procedure, the method including: receiving random access configuration information from a base station; and performing a 2-step random access procedure or a 4-step random access procedure with the base station based on the configuration information, wherein the random access configuration information includes both parameter information for the 2-step random access procedure and parameter information for the 4-step random access procedure.

FIG. 1E

EP 3 996 457 A1

**Description**

TECHNICAL FIELD

The present disclosure relates to a method of performing 2-step random access in a wireless communication system.

BACKGROUND ART

To meet the increase in demand with respect to wireless data traffic after the commercialization of 4th generation (4G) communication systems, considerable efforts have been made to develop improved 5th generation (5G) communication systems or pre-5G communication systems. For this reason, 5G communication systems or pre-5G communication systems are called beyond 4G network communication systems or post long term evolution (LTE) systems. To achieve a high data rate, the implementation of 5G communication systems in an ultra-high frequency band (millimeter wave (mmWave)) (e.g., a 60 GHz band) is under consideration. To alleviate propagation path loss of radio waves and increase propagation distances of radio waves in a millimeter wave band, technologies for 5G communication systems, such as beamforming, massive multi-input multi-output (MIMO), full dimensional MIMO (FD-MIMO), array antenna, analog beamforming, and large-scale antenna system are being discussed. Also, in order to improve a system network for 5G communication systems, technologies, such as evolved small cell, advanced small cell, cloud radio access network (cloud RAN), ultra-dense network, device-to-device (D2D) communication, wireless backhaul, moving network, cooperative communication, coordinated multi-points (CoMP), and reception interference cancellation, are being developed. In addition, for 5G communication systems, hybrid frequency shift keying (FSK) and quadrature amplitude modulation (QAM) (FQAM) and sliding window superposition coding (SWSC), which are advanced coding modulation (ACM) schemes, and filter bank multi-carrier (FBMC), non-orthogonal multiple access (NOMA), and sparse code multiple access (SCMA), which are advanced access technologies, have been developed.

The Internet has evolved from a human-centered connection network, through which humans generate and consume information, to an Internet of things (IoT) network that exchanges and processes information between distributed elements such as objects. An Internet of everything (IoE) technology is emerging, in which a technology related to the IoT is combined with, for example, a technology for processing big data through connection with a cloud server. In order to implement the IoT, various technical components are required, such as, a sensing technology, wired/wireless communication and network infrastructures, a service interfacing technology, a security technology, etc. In recent years, technologies including a sensor network for connecting objects, machine-to-machine (M2M) communication, machine type communication (MTC), etc., have been studied. In the IoT environment, intelligent Internet technology (IT) services may be provided to collect and interpret data obtained from objects connected to each other, and to create new value in human life. As existing information technology (IT) and various industries converge and combine with each other, the IoT may be applied to various fields, such as smart homes, smart buildings, smart cities, smart cars or connected cars, smart grids, health care, smart home appliances, high quality medical services, etc.

Various attempts are being made to apply 5G communication systems to IoT networks. For example, technologies related to sensor networks, M2M communication, MTC, etc., are implemented by using 5G communication technologies including beamforming, MIMO, array antenna, etc. The application of cloud RAN as the big data processing technology described above may be an example of convergence of 5G communication technology and IoT technology.

With the development of wireless communication systems, there is a need to provide a random access procedure for minimizing the delay of mobile communication systems.

DESCRIPTION OF EMBODIMENTS

TECHNICAL PROBLEM

The present disclosure aims to provide a configuration of a message used in a random access procedure.

SOLUTION TO PROBLEM

The disclosed embodiments provide MsgB for a 2-step random access procedure in a wireless communication system.

ADVANTAGEOUS EFFECTS OF DISCLOSURE

According to the present disclosure, the delay caused by random access may be reduced.

BRIEF DESCRIPTION OF DRAWINGS

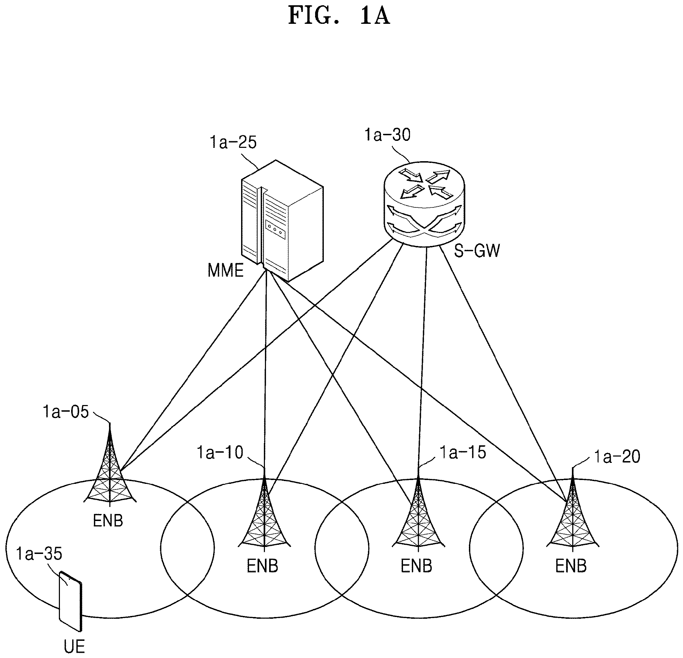

FIG. 1A is a diagram illustrating an architecture of a long term evolution (LTE) system, according to an embodiment of the present disclosure.

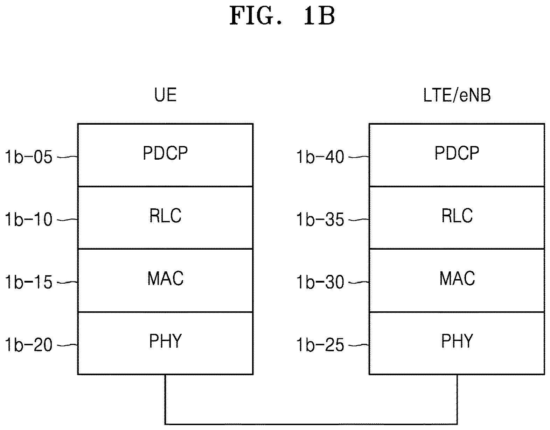

FIG. 1B is a diagram illustrating a radio protocol architecture of an LTE system and a new radio (NR) system, according to an embodiment of the present disclosure.

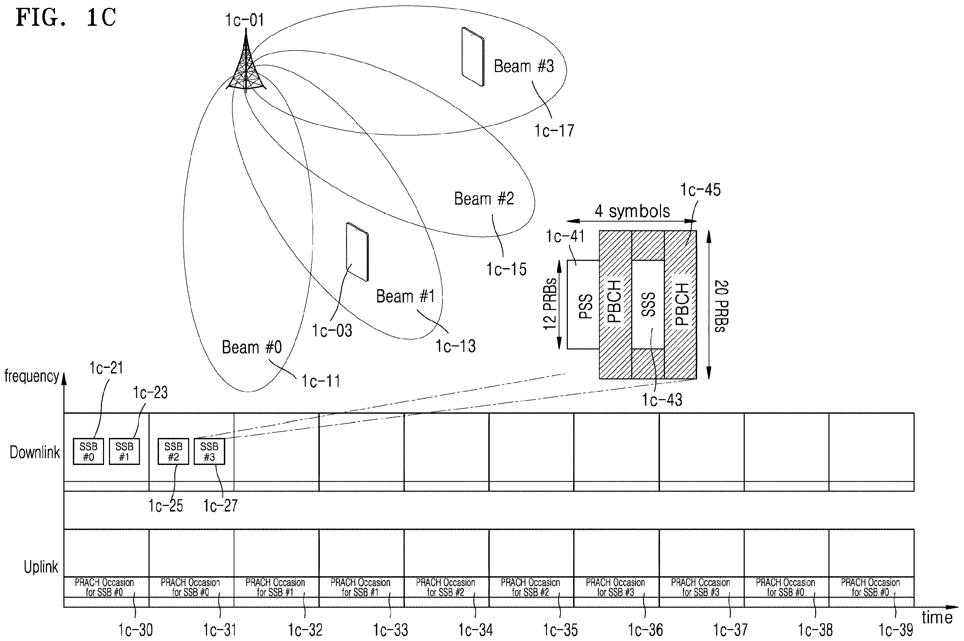

FIG. 1C is a diagram illustrating an example of a downlink and uplink channel frame structure when communication is performed based on a beam in an NR system, according to an embodiment of the present disclosure.

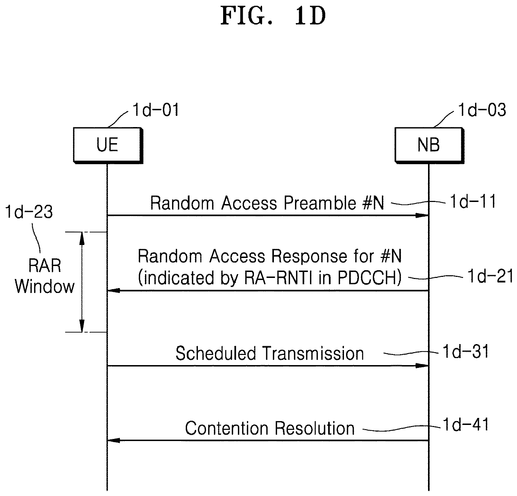

FIG. 1D is a diagram illustrating a procedure, performed by a terminal, of performing contention-based 4-step random access with respect to a base station, according to an embodiment of the present disclosure.

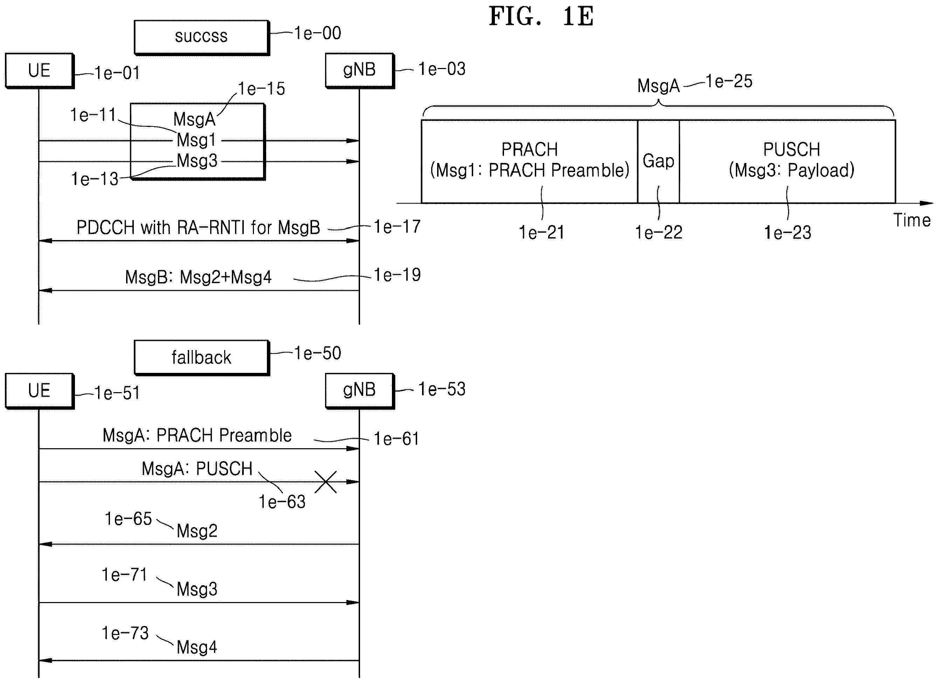

FIG. 1E is a diagram illustrating a procedure, performed by a terminal, of performing a 2-step random access procedure with respect to a base station, according to an embodiment of the present disclosure.

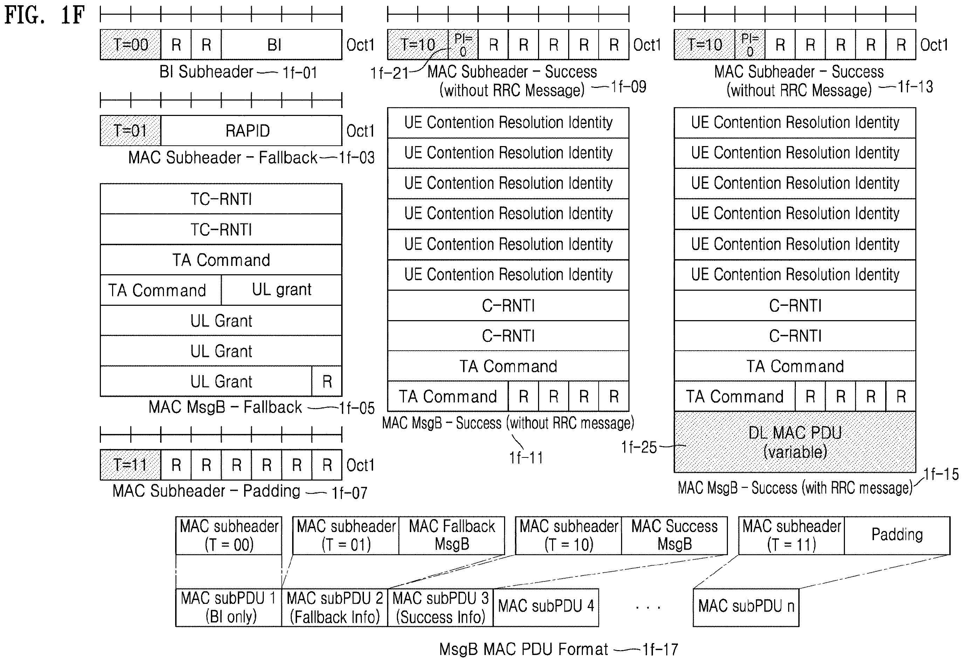

FIG. 1F is a diagram illustrating a first example format of MsgB of 2-step random access, according to an embodiment of the present disclosure.

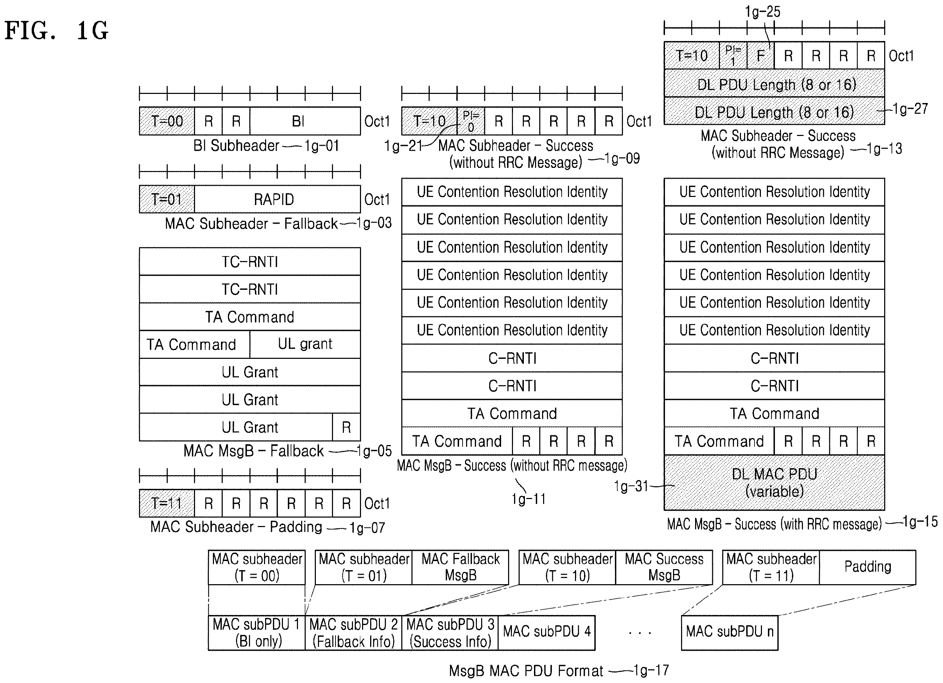

FIG. 1G is a diagram illustrating a modified version of the first example format of MsgB of the 2-step random access, according to an embodiment of the present disclosure.

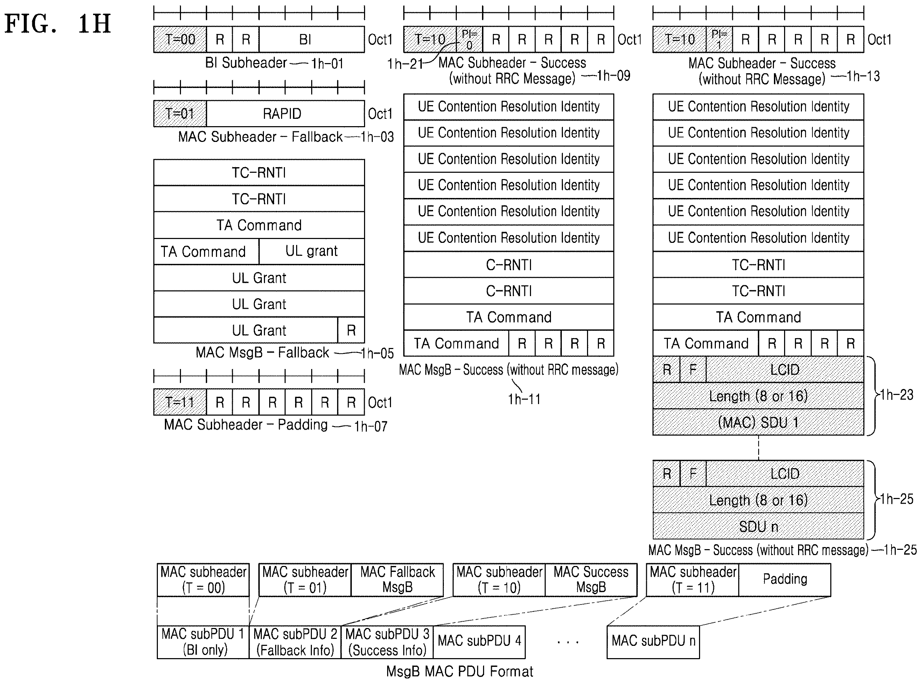

FIG. 1H is a diagram illustrating a second example format of MsgB of the 2-step random access, according to an embodiment of the present disclosure.

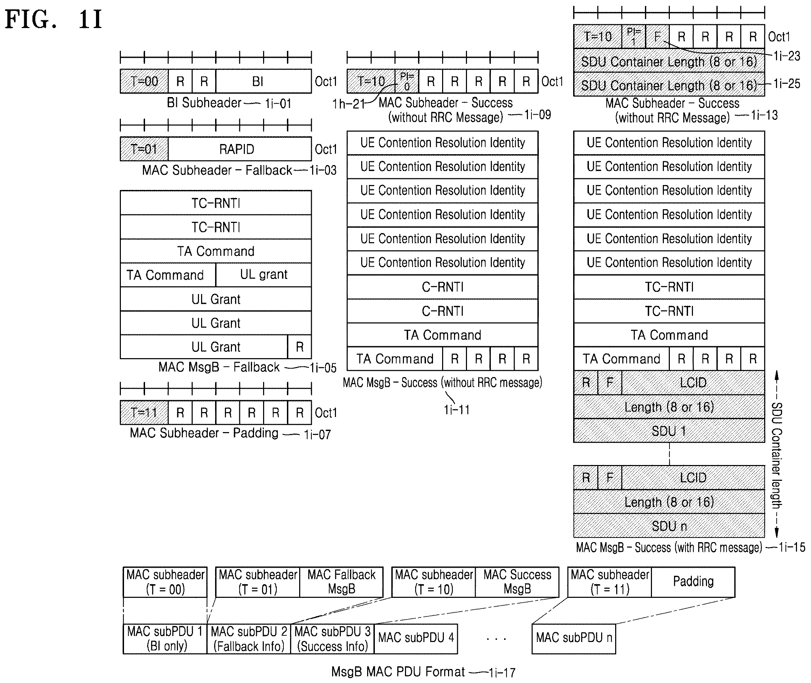

FIG. 1I is a diagram illustrating a modified version of the second example format of MsgB of the 2-step random access, according to an embodiment of the present disclosure.

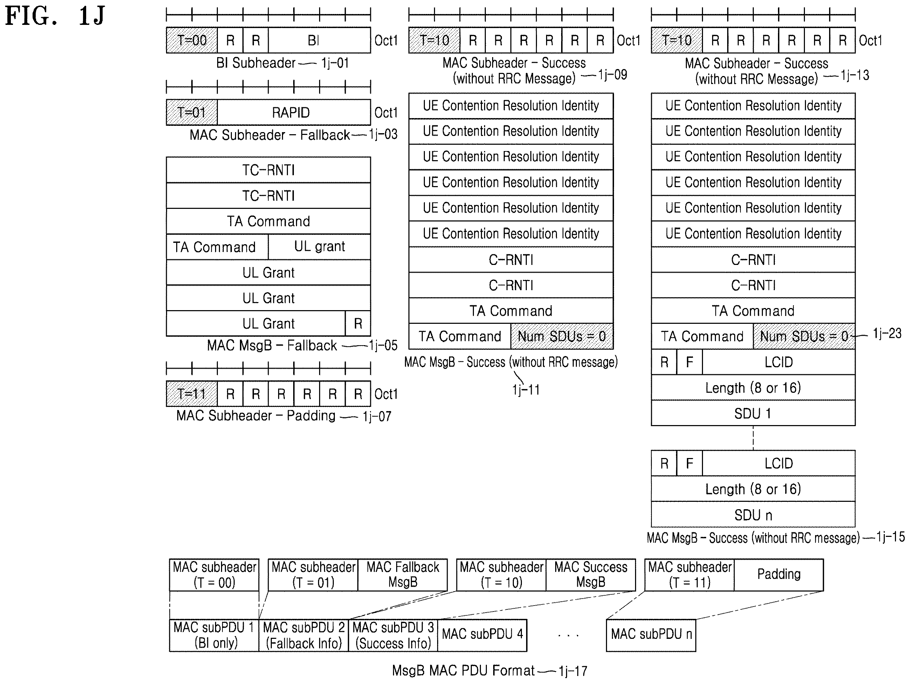

FIG. 1J is a diagram illustrating a third example format of MsgB of the 2-step random access, according to an embodiment of the present disclosure.

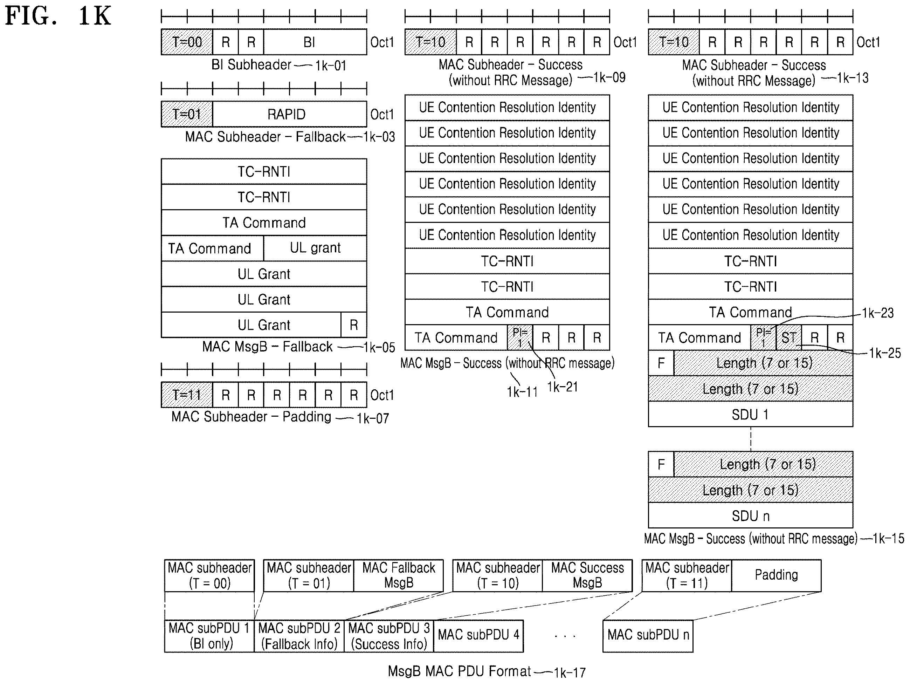

FIG. 1K is a diagram illustrating a fourth example format of MsgB of the 2-step random access, according to an embodiment of the present disclosure.

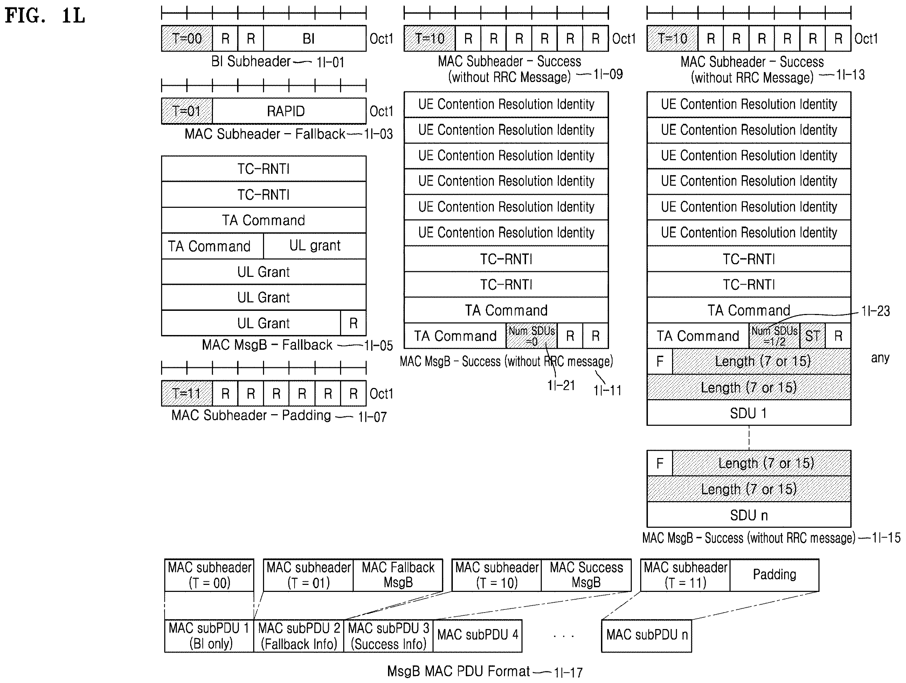

FIG. 1L is a diagram illustrating a fifth example format of MsgB of the 2-step random access, according to an embodiment of the present disclosure.

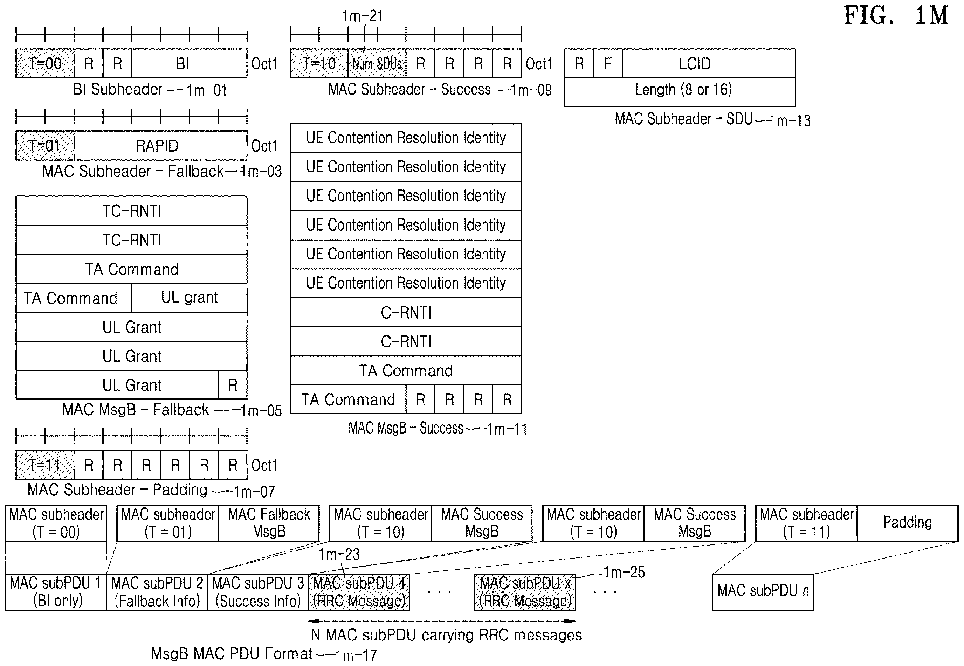

FIG. 1M is a diagram illustrating a sixth example format of MsgB of the 2-step random access, according to an embodiment of the present disclosure.

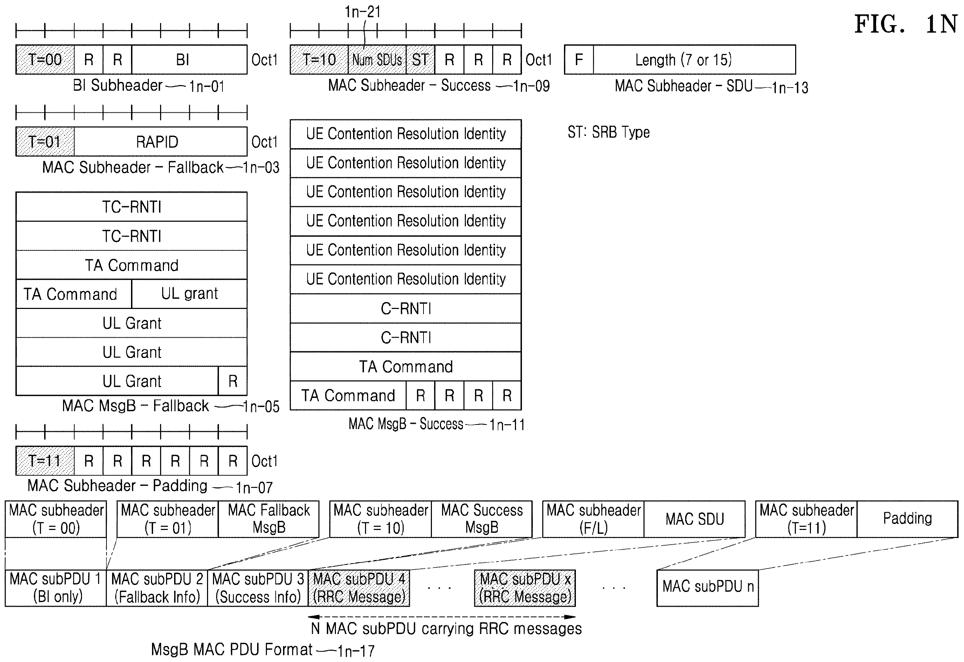

FIG. 1N is a diagram illustrating a modified version of the sixth example format of MsgB of the 2-step random access, according to an embodiment of the present disclosure.

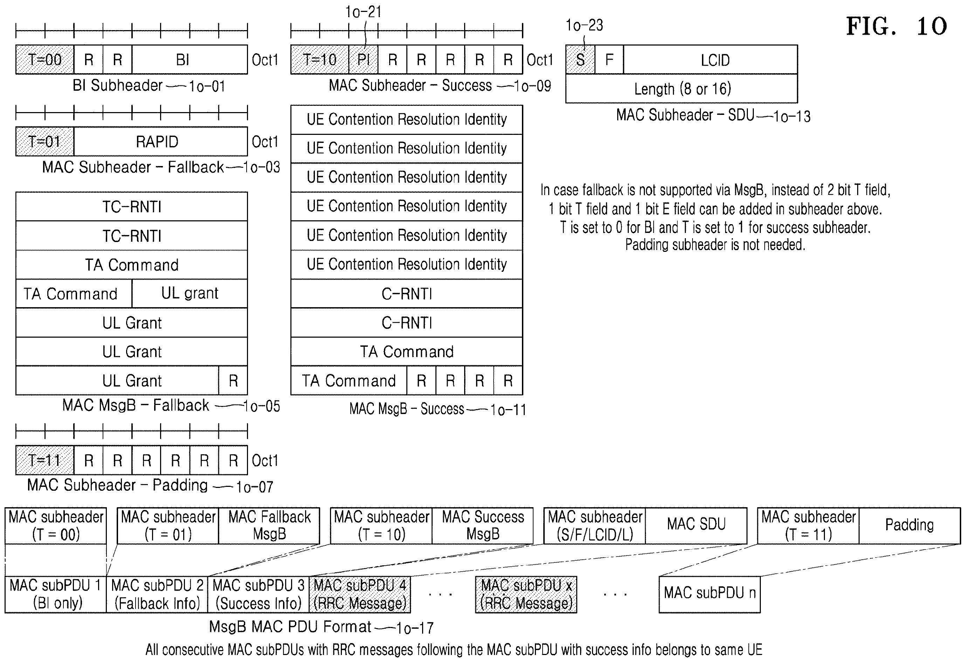

FIG. 1O is a diagram illustrating a seventh format of MsgB of the 2-step random access, according to an embodiment of the present disclosure.

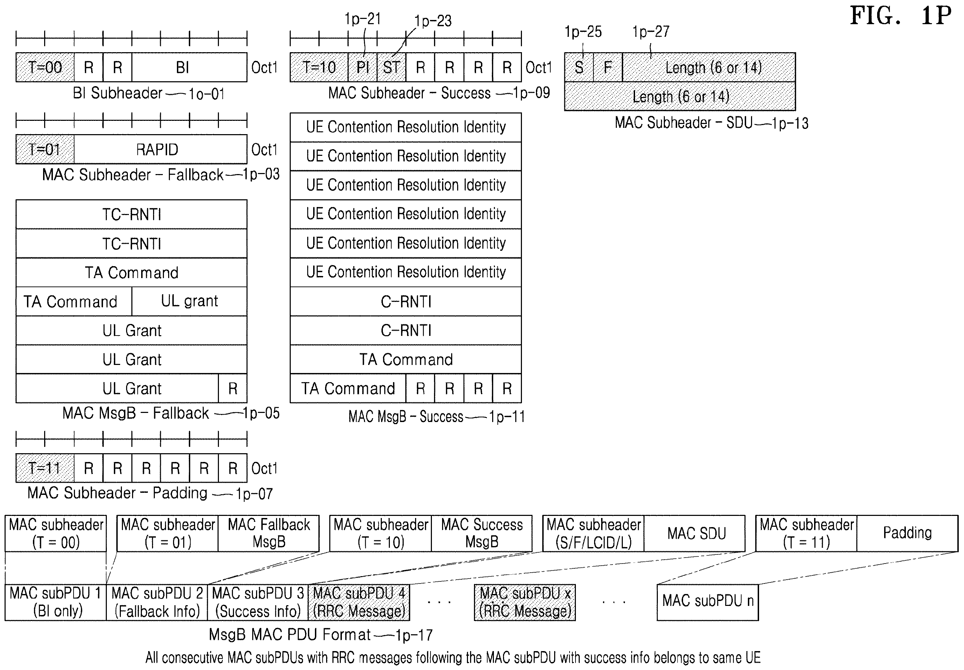

FIG. 1P is a diagram illustrating a modified version of the seventh example format of MsgB of the 2-step random access, according to an embodiment of the present disclosure.

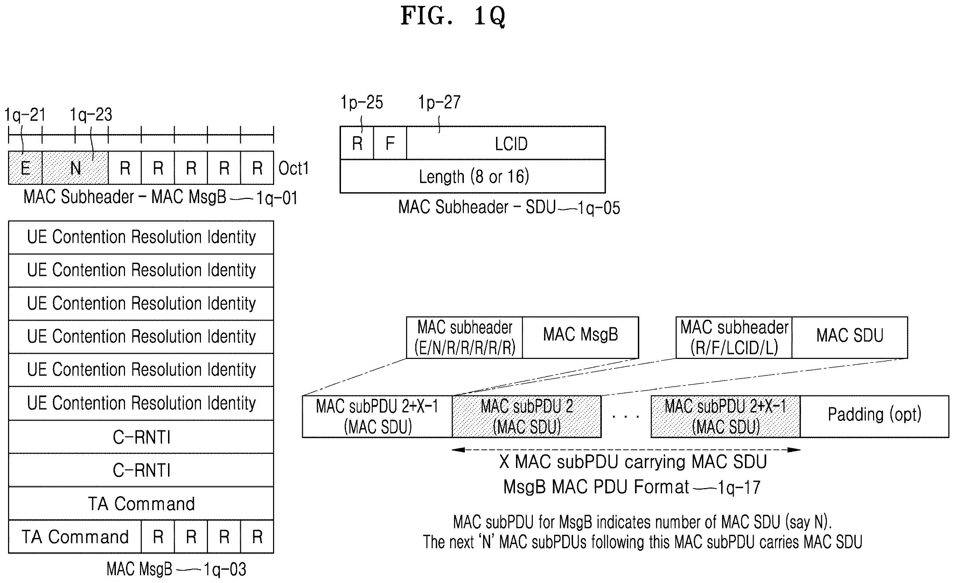

FIG. 1Q is a diagram illustrating an eighth format of MsgB of the 2-step random access, according to an embodiment of the present disclosure.

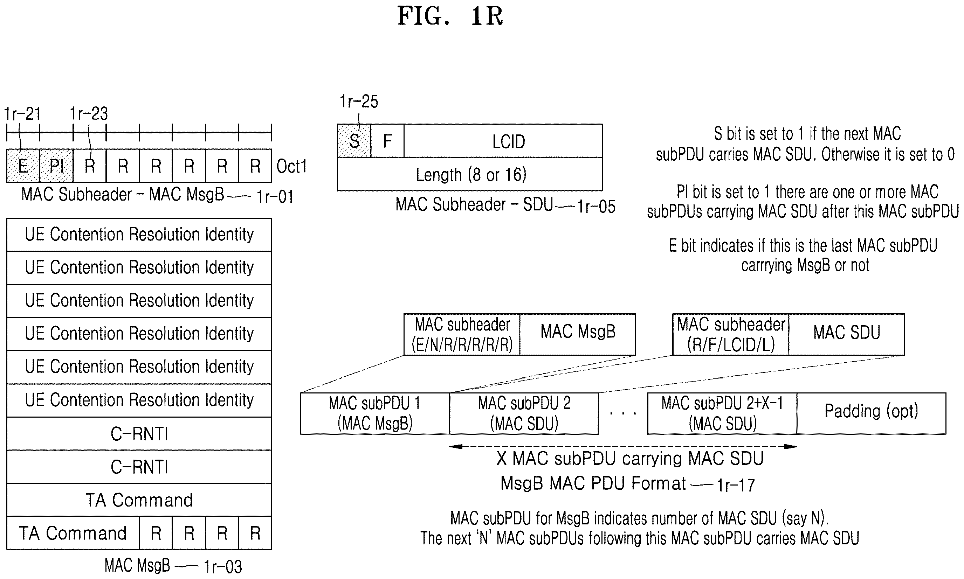

FIG. 1R is a diagram illustrating a ninth format of MsgB of the 2-step random access, according to an embodiment of the present disclosure.

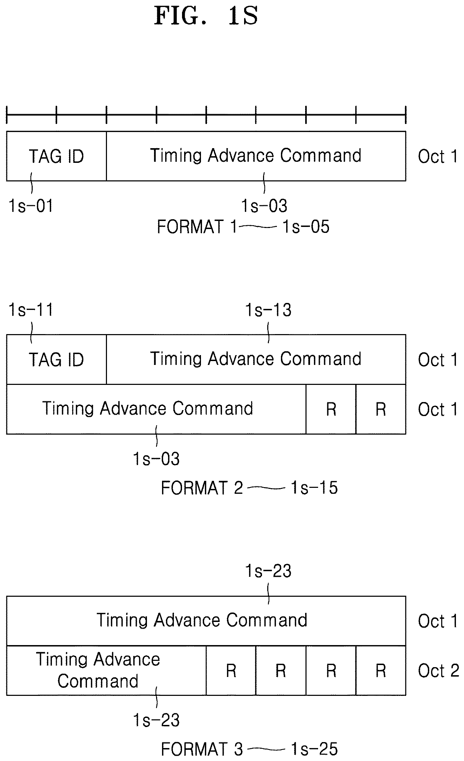

FIG. 1S is a diagram illustrating an example of a timing advance command (TAC) media access control (MAC) control element (CE) format according to an embodiment of the present disclosure.

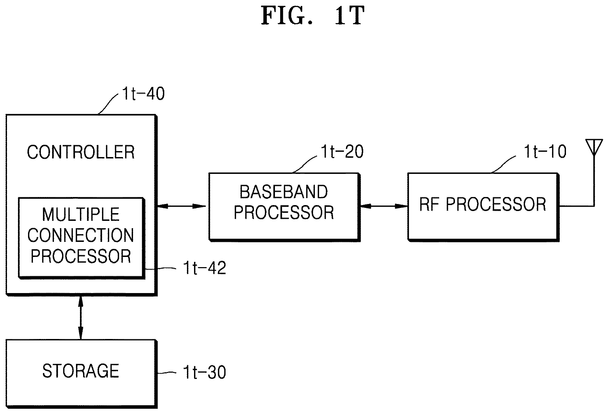

FIG. 1T is a block diagram illustrating an architecture of a terminal in a wireless communication system, according to an embodiment of the present disclosure.

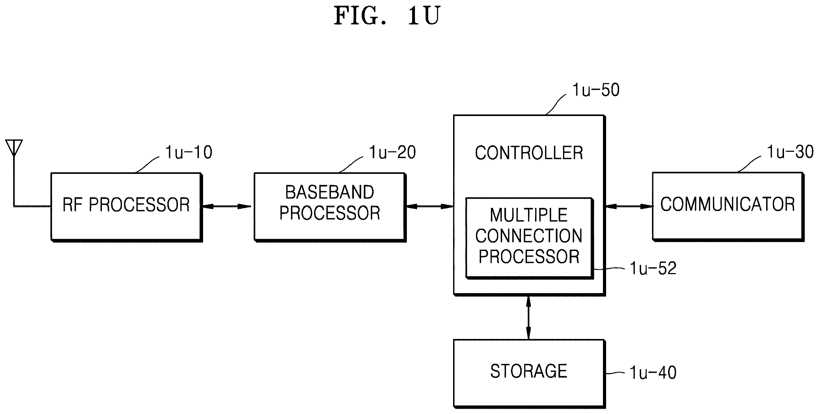

FIG. 1U is a block diagram illustrating an architecture of a base station in a wireless communication system, according to an embodiment of the present disclosure.

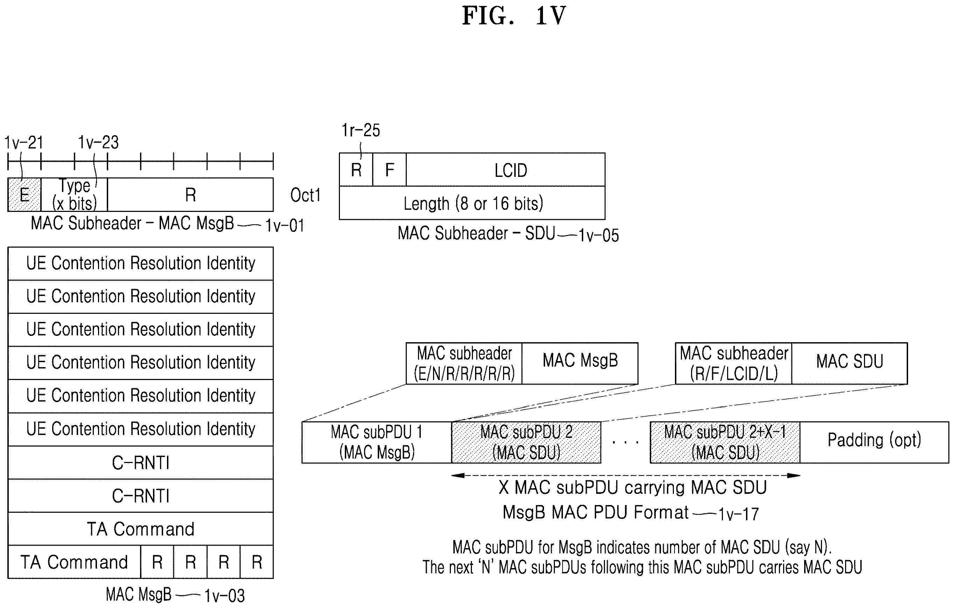

FIG. 1V is a diagram illustrating a tenth format of MsgB of the 2-step random access, according to an embodiment of the present disclosure.

BEST MODE

According to an embodiment disclosure, a method, performed by a UE, of performing a random access procedure may include: receiving random access configuration information from a base station; and performing a 2-step random access procedure or a 4-step random access procedure with respect to the base station based on the configuration information.

The random access configuration information may include both parameter information for the 2-step random access procedure and parameter information for the 4-step random access procedure.

The receiving of the random access configuration information from the base station may include receiving the parameter information for the 2-step random access procedure and the parameter information for the 4-step random access procedure through separate messages or a single message.

The parameter information for the 2-step random access procedure may include a beam failure recovery-related 2-step random access priority parameter and a handover-related 2-step random access priority parameter, and the parameter information for the 4-step random access procedure may include a beam failure recovery-related 4-step random access priority parameter and a handover-related 4-step random access priority parameter.

The performing of the 2-step random access procedure may further include: transmitting Msg A to the base station; and receiving Msg B including a media access control (MAC) protocol data unit (PDU) from the base station.

The MAC PDU may include at least one MAC subPDU.

The at least one MAC subPDU may include at least one of a MAC subPDU including a backoff indicator (BI), a MAC subPDU including a response to successful reception of the Msg A, a MAC subPDU including a fallback random access response (RAR), a MAC subPDU including MAC service data unit (SDU) for a radio resource control (RRC) message, and a MAC subPDU for padding.

The MAC subPDU including the response to the successful reception of the Msg A may include information indicating presence of the MAC subPDU including the MAC SDU for the RRC message.

The information indicating presence of the MAC subPDU including the MAC SDU for the RRC message may be included in a MAC subheader of the MAC subPDU including the response to the successful reception of the Msg A.

The MAC subPDU for the padding may be located at an end of the MAC PDU.

The MAC subPDU including the MAC SDU for the RRC message may be located in concatenation with the MAC subPDU including the response to the successful reception of the Msg A.

According to an embodiment of the present disclosure, a method, performed by a base station, of performing a random access procedure may include: transmitting random access configuration information to a user equipment (UE); and performing a 2-step random access procedure or a 4-step random access procedure with respect to the UE based on the configuration information.

The random access configuration information may include both parameter information for the 2-step random access procedure and parameter information for the 4-step random access procedure.

The transmitting of the random access configuration information to the UE may include transmitting the parameter information for the 2-step random access procedure and the parameter information for the 4-step random access procedure through separate messages or a single message.

The parameter information for the 2-step random access procedure may include a beam failure recovery-related 2-step random access priority parameter and a handover-related 2-step random access priority parameter, and the parameter information for the 4-step random access procedure may include a beam failure recovery-related 4-step random access priority parameter and a handover-related 4-step random access priority parameter.

The performing of the 2-step random access procedure may further include: receiving Msg A from the UE; and transmitting Msg B including a media access control (MAC) protocol data unit (PDU) to the UE.

The MAC PDU may include at least one MAC subPDU.

The at least one MAC subPDU may include at least one of a MAC subPDU including a backoff indicator (BI), a MAC subPDU including a response to successful reception of the Msg A, a MAC subPDU including a fallback random access response (RAR), a MAC subPDU including MAC service data unit (SDU) for a radio resource control (RRC) message, and a MAC subPDU for padding.

The MAC subPDU including the response to the successful reception of the Msg A may include information indicating presence of the MAC subPDU including the MAC SDU for the RRC message.

The MAC subPDU for the padding may be located at an end of the MAC PDU.

The MAC subPDU including the MAC SDU for the RRC message may be located in concatenation with the MAC subPDU including the response to the successful reception of the Msg A.

According to an embodiment of the present disclosure, a user equipment (UE) for performing a random access procedure may include: a transceiver; and a processor configured to receive random access configuration information from a base station and perform a 2-step random access procedure or a 4-step random access procedure with respect to the base station based on the configuration information.

The random access configuration information may include both parameter information for the 2-step random access procedure and parameter information for the 4-step random access procedure.

According to an embodiment of the present disclosure, a base station for performing a random access procedure may include: a transceiver; and a processor configured to transmit random access configuration information from a user equipment (UE) and perform a 2-step random access procedure or a 4-step random access procedure with respect to the UE based on the configuration information,

The random access configuration information may include both parameter information for the 2-step random access procedure and parameter information for the 4-step random access procedure.

MODE OF DISCLOSURE

Hereinafter, an operation principle of the present disclosure will be described in detail with reference to the accompanying drawings. In describing the present disclosure, when the detailed description of the relevant known functions or configurations is determined to unnecessarily obscure the gist of the present disclosure, the detailed description thereof may be omitted. The terms as used herein are those defined by taking into account functions in the present disclosure, but the terms may vary depending on the intention of users or those of ordinary skill in the art, precedents, or the like. Therefore, the definitions should be made based on the contents throughout the specification.

The term for identifying an access node, the term referring to network entities, the term referring to messages, the term referring to an interface between network entities, the terms referring to a variety of identification information, and the like are exemplified for convenience of description. Therefore, the present disclosure is not limited to the terms to be described later, and other terms referring to entities having an equivalent technical meaning may be used.

Effects and features of the present disclosure, and methods of achieving them will be clarified with reference to embodiments described below in detail with reference to the drawings. In this regard, the embodiments of the present disclosure may have different forms and should not be construed as being limited to the descriptions set forth herein. Rather, these embodiments are provided so that the present disclosure will be thorough and complete and will fully convey the concept of the embodiments of the present disclosure to those of ordinary skill in the art. The same reference numerals refer to the same elements throughout the specification.

It will be understood that the respective blocks of flowcharts and combinations of the flowcharts may be performed by computer program instructions. Because these computer program instructions may be embedded in a processor of a general-purpose computer, a special-purpose computer, or other programmable data processing apparatuses, the instructions executed through the processor of the computer or other programmable data processing apparatus generates modules for performing the functions described in the flowchart block(s). Because these computer program instructions may also be stored in a computer-usable or computer-readable memory that may direct the computer or other programmable data processing apparatus so as to implement functions in a particular manner, the instructions stored in the computer-usable or computer-readable memory are also capable of producing an article of manufacture containing instruction modules for performing the functions described in the flowchart block(s). Because the computer program instructions may also be embedded into the computer or other programmable data processing apparatus, the instructions for executing the computer or other programmable data processing apparatuses by generating a computer-implemented process by performing a series of operations on the computer or other programmable data processing apparatuses may provide operations for executing the functions described in the flowchart block(s).

Also, each block may represent part of a module, segment, or code that includes one or more executable instructions for executing a specified logical function(s). It should also be noted that, in some alternative implementations, the functions described in the blocks may occur out of the order noted in the drawings. For example, two blocks illustrated in succession may in fact be executed substantially concurrently, or the blocks may sometimes be executed in a reverse order, depending on the functions involved therein.

The term "-er/or" as used herein refers to a software element or a hardware element such as field programmable gate array (FPGA) or application specific integrated circuit (ASIC), and the "module" or "-er/or" performs certain functions. However, the term "-er/or" is not limited to software or hardware. The term "-er/or" may be configured in an addressable storage medium or may be configured to reproduce one or more processors. Therefore, for example, the term "-er/or" includes elements, such as software elements, object-oriented software elements, class elements, and task elements, processes, functions, attributes, procedures, subroutines, segments of program code, drivers, firmware, microcodes, circuits, data, databases, data structures, tables, arrays, and variables. Functions provided in the elements and the "-ers/ors" may be combined with fewer elements and "-ers/ors", or may be separated from additional elements and "-ers/ors." Furthermore, the elements and the "-ers/ors" may be implemented to reproduce one or more central processing units (CPUs) in the device or secure multimedia card. Also, in embodiments of the present disclosure, the "-er/or" may include one or more processors.

In describing the present disclosure, when the detailed description of the relevant known functions or configurations is determined to unnecessarily obscure the gist of the present disclosure, the detailed description thereof may be omitted. Hereinafter, embodiments of the present disclosure will be described in detail with reference to the accompanying drawings.

The term for identifying an access node, the term referring to network entities, the term referring to messages, the term referring to an interface between network entities, the terms referring to a variety of identification information, and the like are exemplified for convenience of description. Therefore, the present disclosure is not limited to the terms to be described later, and other terms referring to entities having an equivalent technical meaning may be used. For example, in the following description, a terminal may refer to a MAC entity in a terminal that exists for each master cell group (MCG) and secondary cell group (SCG) to be described below.

For convenience of descriptions, the terms and names defined in the 3rd Generation Partnership Project Long Term Evolution (3GPP LTE) standard are used herein. However, the present disclosure is not limited by the terms and names and may be equally applied to systems conforming to other standards.

Hereinafter, a base station allocates resources to a terminal, and may include at least one of a gNode B, an eNode B, a Node B, a BS, a radio access unit, a base station controller, or a node on a network. Examples of a terminal may include a user equipment (UE), a mobile station (MS), a cellular phone, a smartphone, a computer, a multimedia system capable of performing a communication function, or the like. Of course, the present disclosure is not limited to the above examples.

In particular, the present disclosure may be applied to 3GPP new radio (NR) (5th generation (5G) mobile communication standard). Also, the present disclosure may be applied to intelligent services (e.g., smart homes, smart buildings, smart cities, smart cars or connected cars, health care, digital education, retail, security and safety related services, etc.) based on 5G communication technologies and IoT related technologies. The term "eNB" as used herein may be used interchangeably with the term "gNB" for convenience of description. That is, a base station described as eNB may represent gNB. Also, the term "terminal" may refer to not only mobile phones, NB-IoT devices, and sensors, but also other wireless communication devices.

A wireless communication system has evolved from a system providing voice-oriented services to a broadband wireless communication system providing high speed high quality packet data services of communication standards such as High Speed Packet Access (HSPA) of 3GPP, LTE or Evolved Universal Terrestrial Radio Access (E-UTRA), LTE-A, LTE-Pro, High Rate Packet Data (HRPD) of 3GPP2, Ultra Mobile Broadband (UMB), and IEEE 802.16e.

In an LTE system as a representative example of a broadband wireless communication system, an orthogonal frequency division multiplexing (OFDM) scheme is employed in a downlink (DL), and a single carrier frequency division multiple access (SC-FDMA) scheme is employed in an uplink (UL). The UL refers to a radio link through which a terminal (UE or MS) transmits data or a control signal to a base station (eNode B or BS), and the DL refers to a radio link through which a base station transmits data or a control signal to a terminal. In the multiple access scheme as described above, data or control information of each user may be identified by performing allocation and operation so that time-frequency resources for carrying data or control information for each user do not overlap each other, that is, orthogonality is established.

Future communication systems after LTE, that is, 5G communication systems have to be able to freely reflect various requirements of users and service providers. Therefore, services that satisfy various requirements at the same time have to be supported. Services considered for 5G communication systems include enhanced mobile broadband (eMBB), massive machine type communication (mMTC), and ultra reliability low latency communication (URLLC).

According to some embodiments, eMBB aims to provide a data rate that is higher than that supported by LTE, LTE-A, or LTE-Pro. For example, in 5G communication systems, eMBB has to be able to provide a peak data rate of 20 Gbps in a DL and a peak data rate of 10 Gbps in an UL in terms of a single base station. Also, the 5G communication systems have to provide a peak data rate and simultaneously provide an increased user perceived data rate of the UE. In order to satisfy such requirements, there is a need to improve various transmission and reception technologies including an improved multi-input multi-output (MIMO) transmission technology. Also, in a 2 GHz band used by current LTE, signals are transmitted using up to 20 MHz transmission bandwidth. However, 5G communication systems use a frequency bandwidth wider than 20 MHz in 3-6 GHz frequency bands or 6 GHz or higher frequency bands. Therefore, the data rate required by 5G communication systems may be satisfied.

At the same time, mMTC is under consideration so as to support application services such as Internet of things (IoT) in 5G communication systems. In order to efficiently provide IoT, mMTC needs to support access of a massive terminal in a cell, improve coverage of the terminal, improve battery time, and reduce costs of the terminal. Because IoT is attached to various sensors and various devices to provide a communication function, IoT has to be able to support a large number of terminals (e.g., 1,000,000 terminals/km$^2$) in a cell. Also, due to the nature of the service, the terminal supporting mMTC is likely to be located in a shaded area that is not covered by the cell, such as the basement of a building. Therefore, wider coverage than other services provided by the 5G communication systems may be required. The terminal supporting mMTC has to be configured as an inexpensive terminal, and it is difficult to frequently replace a battery of the terminal. Therefore, a very long battery life time such as 10 to 15 years may be required.

Finally, URLLC is a cellular-based wireless communication service used for a specific purpose (mission-critical). URLLC may be used for services used in remote control for robots or machinery, industrial automation, unmanned aerial vehicles, remote health care, emergency alerts, or the like. Therefore, communication provided by URLLC has to provide very low latency (ultra-low latency) and very high reliability. For example, a service supporting URLLC has to satisfy air interface latency of less than 0.5 milliseconds and simultaneously has a packet error rate of $10^{-5}$ or less. Therefore, for services supporting URLLC, the 5G systems have to provide a smaller transmit time interval (TTI) than other services and simultaneously require a design matter that has to allocate a wide resource in a frequency band so as to ensure reliability of a communication link.

The above-described three services considered in 5G communication systems, that is, eMBB, URLLC, and mMTC, may be multiplexed and transmitted in a single system. In this case, different transmission and reception technologies and transmission and reception parameters may be used between services so as to satisfy different requirements of the respective services. However, mMTC, URLLC, and eMBB are only examples of different service types, and the service types to which the present disclosure is applied are not limited to the above-described examples.

For convenience of description, the terms and names defined in the LTE and NR standards, which are the latest standards defined by the 3GPP among the current communication standards, are used herein. However, the present disclosure is not limited by the LTE and NR terms and names and may be equally applied to systems conforming to other standards. In particular, the present disclosure may be applied to 3GPP NR (5G mobile communication standard). Also, embodiments of the present disclosure may be applied to other communication systems having a similar technical background or channel form. Also, the present disclosure may be applied to other communication systems through some modifications without departing from the scope of the present disclosure.

FIG. 1A is a diagram illustrating an architecture of an LTE system, according to an embodiment of the present disclosure. An NR system also has a similar structure.

Referring to FIG. 1A, as illustrated, an LTE wireless communication system may include a plurality of base stations 1a-05, 1a-10, 1a-15, and 1a-20, a mobility management entity 1a-20, and serving-gateway (GW) 1a-30. A UE (or a terminal) 1a-35 may access an external network through the base stations 1a-05, 1a-10, 1a-15, and 1a-20 and the S-GW 1a-30.

The base stations 1a-05, 1a-10, 1a-15, and 1a-20 are access nodes of a cellular network and may provide radio access to UEs accessing the network. That is, in order to serve traffics of users, the base stations 1a-05, 1a-10, 1a-15, and 1a-20 may support a connection between the UEs 1a-35 and a core network (CN) by collecting and scheduling status information such as buffer status, available transmission power status, and channel status of the UEs. The MME 1a-25 is a device that is responsible for various control functions as well as a mobility management function for the UE and is connected to a plurality of base stations. The S-GW 1a-30 may be a device that provides a data bearer. Also, the MME 1a-25 and the S-GW 1a-30 may further perform authentication, bearer management, and the like for the UE 1a-35 accessing the network, and may process packets received from the base stations 1a-05, 1a-10, 1a-15, 1a-20 or packets to be transmitted to the base stations 1a-05, 1a-10, 1a-15, 1a-20.

FIG. 1B is a diagram illustrating a radio protocol architecture of an LTE system and an NR system, according to an embodiment of the present disclosure.

Referring to FIG. 1B, in the radio protocol of the LTE system, a UE and an ENB may respectively include layers (or entities) of packet data convergence protocol (PDCP) 1b-05 and 1b-40, radio link control (RLC) 1b-10 and 1b-35, and medium access control (MAC) 1b-15 and 1b-30.

The PDCP 1b-05 and 1b-40 may be responsible for operations such as IP header compression/reconstruction, and the RLC 1b-10 and 1b-35 may reconfigure a PDCP packet data unit (PDU) to an appropriate size. The MAC 1b-15 and 1b-30 may be connected to RLC layers configured in one UE, and may perform an operation of multiplexing RLC PDUs to MAC PDUs and demultiplexing RLC PDUs from MAC PDUs.

Physical (PHY) layers 1b-20 and 1b-25 may perform an operation of channel-coding and modulating upper layer data, making the channel-coded and modulated upper layer data into OFDM symbols, and transmitting the OFDM symbols over a radio channel, or demodulating and channel-decoding OFDM symbols received through a radio channel and transmitting the channel-decoded OFDM symbols to the upper layer. Also, hybrid automatic repeat request (HARQ) may be used for additional error correction in the PHY layer, and the receiving end may transmit a 1 bit indicating the reception or non-reception of the packet transmitted from the transmitting end. This is referred to as HARQ ACK/NACK.

In the case of the LTE, DL HARQ ACK/NACK information for UL data transmission may be transmitted through a physical channel such as a physical hybrid-ARQ indicator channel (PHICH). In the case of the NR, DL HARQ ACK/NACK information for UL data transmission may be provided based on scheduling information of a corresponding UE in a physical dedicated control channel (PDCCH) that is a channel through which DL/UL resource allocation or the like is transmitted. That is, in the NR, the base station or the UE may determine whether retransmission of UL data is required or whether new transmission should be performed through the PDCCH. This is because asynchronous HARQ is applied in the NR. UL HARQ ACK/NACK information for DL data transmission may be transmitted through a physical channel such as a physical uplink control channel (PUCCH) or a physical uplink shared channel (PUSCH). The PUCCH is generally transmitted in a UL of a primary cell (PCell) to be described below. When the UE supports the PUCCH, the base station may transmit the PUCCH to the corresponding UE in addition to a secondary cell (SCell) to be described below. This is referred to as PUCCH SCell.

Although not illustrated, radio resource control (RRC) layer may be present above the PDCP layers of the UE and the base station, respectively.

The RRC layer may exchange access and measurement-related configuration control messages for radio resource control.

On the other hand, the PHY layer may be configured to use one or more frequencies/carriers. A technology for simultaneously configuring and using a plurality of frequencies is referred to as carrier aggregation (CA). The CA refers to the additional use of a primary carrier and one or more subcarriers, instead of using only one carrier for communication between the UE and the base station (E-UTRAN NodeB, eNB, etc.), such that the amount of transmission significantly increases by the number of subcarriers. On the other hand, in the LTE, a cell in a base station using a primary carrier is referred to a PCell, and a cell in a base station using a subcarrier is referred to as a SCell. Of course, the present disclosure is not limited to the above examples.

FIG. 1C is a diagram illustrating an example of a DL and UL channel frame structure when communication is performed based on a beam in an NR system, according to an embodiment of the present disclosure.

In FIG. 1C, a base station 1c-01 may transmit a signal in the form of beams 1c-11, 1c-13, 1c-15, and 1c-17 in order to transmit a wider coverage or a stronger signal. Therefore, a UE 1c-03 in a cell may have to transmit and receive data by using a specific beam (beam #1 1c-13 in FIG. 1C) transmitted by the base station.

On the other hand, the state of the UE is divided into an idle mode (or an idle mode) (RRC_IDLE) state and a connected mode (RRC_CONNECTED) state according to whether the UE is connected to the base station. Therefore, the base station may not know the location of the UE in the idle mode state.

When the UE in the idle mode state wants to transition to the connected mode state, the UE may receive synchronization signal blocks (SSBs) 1c-21, 1c-23, 1c-25, and 1c-27 that are transmitted by the base station. The SSB may be an SSB signal that is periodically transmitted by the base station according to a set period. Each SSB may include a primary synchronization signal (PSS) 1c-41, a secondary synchronization signal (SSS) 1c-43, and a physical broadcast channel (PBCH).

In FIG. 1C, a scenario in which an SSB is transmitted for each beam is assumed. For example, it is assumed that SSB #0 1c-21 is transmitted by using beam #0 1c-11, SSB #1 1c-23 is transmitted by using beam #1 1c-13, SSB #2 1c-25 is transmitted by using beam #2 1c-15, and SSB #3 1c-27 is transmitted by using beam #3 1c-17. Also, in FIG. 1C, it is assumed that the UE in the idle mode is located in beam #1, but even when the UE in the connected mode performs random access, the UE selects an SSB received when the UE performs random access.

Referring to FIG. 1C, the UE may receive SSB #1 transmitted through beam #1. Upon receiving SSB #1, the UE obtains a physical cell identifier (PCI) of the base station through the PSS and the SSS. Because the UE receives the PBCH, the UE may identify an identifier (i.e., #1) of the currently received SSB, at what location the current SSB is received within a 10 ms frame, and in which one of system frame numbers (SFNs) having a period of 10.24 seconds the current SSB is received. Also, a master information block (MIB) may be included in the PBCH. The MIB may include information about a location at which system information block type 1 (SIB1) that broadcasts more detailed cell configuration information is able to be received. Upon receiving SIB1, the UE may know the total number of SSBs transmitted by the base station, and may identify locations of physical random access channel (PRACH) occasions 1c-30 to 1c-39 capable of performing random access in order to transition to the connected mode state (more specifically, capable of transmitting a preamble that is a physical signal specially designed for UL synchronization) (in FIG. 1C, assuming a scenario in which the SSB is allocated every 1 ms).

In addition, the UE may know which one of PRACH occasions is mapped to an SSB index and to which SSB index the PRACH occasion is mapped, based on the information of SIB1. For example, in FIG. 1C, a scenario in which the SSB is allocated every 1 ms is assumed, and a scenario in which 1/2 SSB is allocated per PRACH occasion (i.e., two PRACH occasions per SSB) is assumed. Accordingly, a scenario in which two PRACH occasions are allocated for each SSB from the start of the PRACH occasion starting according to an SFN value is illustrated. That is, the PRACH occasion 1c-30 and the PRACH occasion 1c-31 may be allocated for SSB #0, and the PRACH occasion 1c-32 and the PRACH occasion 1c-33 may be allocated for SSB #1. After all the SSBs are set, PRACH occasion may be allocated again for the first SSB (PRACH occasion 1c-38 and PRACH occasion 1c-39).

Accordingly, the UE recognizes the location of the PRACH occasions 1c-32 and 1c-33 for SSB #1, and transmits a random access preamble to the earliest PRACH occasion (e.g., PRACH Occasion 1c-32) at the current time among the PRACH occasions 1c-32 and 1c-33 corresponding to SSB #1. Because the base station has received the preamble in the PRACH occasion 1c-32, the base station may know that the UE selected SSB #1 and transmitted the preamble, and may transmit and receive data through a beam corresponding to SSB #1 when random access is performed thereafter.

On the other hand, when the connected UE moves from a source base station to a target base station due to handover or the like, the UE may perform random access in the target base station and may perform an operation of selecting the SSB and transmitting random access. In addition, during handover, a handover command is transmitted to the UE so as to move from the source base station to the target base station. In this case, a dedicated random access preamble identifier may be allocated to a handover command message for each SSB of the target base station so as to be used when random access is performed in the target base station. In this case, the base station may not allocate a dedicated random access preamble identifier to all beams (according to the current location of the UE, etc.). Therefore, a dedicated random access preamble may not be allocated to some SSBs (e.g., a dedicated random access preamble is allocated only to Beam #2 and Beam #3).

When a dedicated random access preamble is not allocated to the SSB selected by the UE for preamble transmission, random access may be performed by randomly selecting a contention-based random access preamble. For example, in this drawing, after the UE first performs random access by being located in Beam #1 but fails, a scenario in which the UE is located in Beam #3 and transmits the dedicated preamble when the random access preamble is transmitted again may be possible. Random access. That is, when preamble retransmission occurs even within one random access procedure, a contention-based random access procedure and a non-contention-based random access procedure may be mixed according to whether the dedicated random access preamble is allocated to the selected SSB for each preamble transmission.

FIG. 1D is a diagram illustrating a contention-based 4-step random access procedure that is performed by a UE in various cases requiring initial access, reconnection, handover, and other random access with respect to a base station, according to an embodiment of the present disclosure.

In order to access a base station 1d-03, a UE 1d-01 selects a PRACH according to FIG. 1C and transmits a random access preamble to the corresponding PRACH (1d-11). According to an embodiment of the present disclosure, one or more UEs 1d-01 may simultaneously transmit the random access preamble to a PRACH resource. The PRACH resource may be over one subframe, or only some symbols within one subframe may be used.

Also, according to an embodiment of the present disclosure, information about the PRACH resource may be included in system information broadcast by the base station 1d-03. Therefore, the UE may know which time/frequency resource should be used to transmit the preamble. Also, the random access preamble is a specific sequence specially designed so as to be received even when transmitted before being completely synchronized with the base station 1d-03, and there may be a plurality of preamble identifiers (indices) according to the standard. When there are a plurality of preamble identifiers, the preamble transmitted by the UE 1d-01 may be randomly selected by the UE, or may be a specific preamble designated by the base station 1d-03.

When the base station 1d-03 receives the preamble, the base station 1d-03 transmits a random access response (hereinafter referred to as RAR) message (also referred to as Msg2) to the UE 1d-01 (1d-21). The RAR message may include identifier information about the preamble used in operation 1d-11, and may include UL transmission timing correction information, and UL resource allocation information and temporary UE identifier information to be used in subsequent operation (i.e., 1d-31).

According to an embodiment of the present disclosure, for example, when a plurality of UEs transmit different preambles to attempt random access in operation 1d-11, the identifier information about the preamble may include responses to each preamble in the RAR message, and may be transmitted to indicate which preamble the corresponding response is a response message to. The UL resource allocation information included in each response to each preamble may be detailed information about a resource to be used by the UE in operation 1d-31, and may include a physical location and a size of the resource, a modulation and coding scheme (MCS) used for transmission, and power control information during transmission. When the UE that has transmitted the preamble makes an initial connection, the UE does not have the identifier allocated by the base station for communication with the base station, the temporary UE identifier information may be a value transmitted so as to be used for this purpose.

On the other hand, the RAR message may include the response(s) for each preamble and may optionally include a backoff indicator (BI). When the random access preamble has to be retransmitted because random access is not successfully performed, the backoff indicator may be a value transmitted so as to delay transmission at random according to the value of the backoff indicator without retransmitting the preamble immediately.

More specifically, when the UE does not properly receive the RAR, or when contention resolution to be described below is not properly achieved, the UE may have to retransmit the random access preamble. In this case, the value indicated by the backoff indicator may be indicated by the following Index value. The UE may select a random value within a range of 0 to the value indicated by the Index value, and may retransmit the random access preamble after a time corresponding to the value. For example, when the base station indicates 5 (i.e., 60 ms) as the BI value and the UE randomly selects a value of 23 ms from 0 ms to 60 ms, the selected value is stored in a variable called PREAMBLE_BACKOFF, and the UE performs a preamble retransmission procedure after 23 ms. In the case in which the backoff indicator is not transmitted, when the random access preamble has to be retransmitted because random access is not successfully performed, the UE may directly transmit the random access preamble.

[Table 1]

| Index | Backoff Parameter value (ms) |
|-------|------------------------------|
| 0 | 5 |
| 1 | 10 |
| 2 | 20 |
| 3 | 30 |
| 4 | 40 |

(continued)

| Index | Backoff Parameter value (ms) |
|---|---|
| 5 | 60 |
| 6 | 80 |
| 7 | 120 |
| 8 | 160 |
| 9 | 240 |
| 10 | 320 |
| 11 | 480 |
| 12 | 960 |
| 13 | 1920 |
| 14 | Reserved |
| 15 | Reserved |

The RAR message has to be transmitted within a certain period starting from a certain time after the transmission of the preamble. The certain period starting after the certain time after the transmission of the preamble is referred to as a "RAR window." The RAR window may be a time interval starting from a time point when a certain time has passed since the transmission of the first preamble. The certain time may have a subframe unit (1 ms) or a value less than the subframe unit. Also, the length of the RAR window may be a certain value set by the base station for each PRACH resource or one or more PRACH resource sets in a system information message broadcast by the base station.

On the other hand, when the RAR message is transmitted, the base station schedules the corresponding RAR message through the PDCCH, and the corresponding scheduling information may be scrambled by using random access-radio network temporary identifier (RA-RNTI). The RA-RNTI is mapped to the PRACH resource used to transmit the 1d-11 message, and the UE that has transmitted the preamble to the specific PRACH resource may attempt to receive the PDCCH based on the RA-RNTI and determine whether there is the corresponding RAR message. When the RAR message is a response to the preamble transmitted by the UE in operation 1d-11, as illustrated in this example diagram, the RA-RNTI used for the RAR message scheduling information includes information about the corresponding 1d-11 transmission. To this end, the RA-RNTI may be calculated by the following equation. Of course, the present disclosure is not limited to the above examples.

$$RA\text{-}RNTI = 1 + s\_id + 14 \times t\_id + 14 \times 80 \times f\_id + 14 \times 80 \times 8 \times ul\_carrier\_id$$

(Equation 1)

In this case, s_id is an index corresponding to the first OFDM symbol in which the transmission of the preamble transmitted in operation 1d-11 is started, and may have a value of $0 \leq s\_id < 14$ (i.e., the maximum number of OFDMs in one slot).

Also, t_id is an index corresponding to the first slot in which the transmission of the preamble transmitted in operation 1d-11 is started, and may have a value of $0 \leq t\_id < 80$ (i.e., the maximum number of slots in one system frame (10 ms)).

Also, f_id represents to which PRACH resource the preamble transmitted in operation 1d-11 is transmitted on a frequency, and may have a value of $0 \leq f\_id < 8$ (i.e., the maximum number of PRACHs on a frequency within the same time).

ul_carrier_id may be a parameter for, when two carriers are used for UL for one cell, identify whether the preamble is transmitted in a normal uplink (NUL) (in this case, 0), or whether the preamble is transmitted in a supplementary uplink (SUL) (in this case, 1).

The UE that has received the RAR message transmits another message to the resource allocated to the RAR message according to the various purposes described above (1d-31). The third message transmitted in the example drawing is also referred to as Msg3 (that is, the preamble in operation 1d-11 or 1d-13 is also referred to as Msg1, and the RAR in operation 1d-21 is referred to as Msg2.) As an example of Msg3 transmitted by the UE, in the case of initial connection, an RRCSetupRequest message that is a message of the RRC layer may be included. In the case of reconnection, an RRCReestablishmentRequest message may be included. In the case of handover, an RRCReconfigurationComplete message may be included. However, the present disclosure is not limited thereto. Alternatively, a buffer status report (BSR) message for resource request may be transmitted as Msg3.

Then, for the case of initial transmission (that is, Msg3 does not include base station identifier information previously allocated to the UE, etc.), the UE may receive a contention resolution message from the base station (1d-41). The contention resolution message includes the contents transmitted by the UE in Msg3 as it is. Even when there are a plurality of UEs that have selected the same preamble in operation 1d-11 or 1d-13, it is possible to inform about which UE is the response to.

FIG. 1E is a diagram illustrating a procedure, performed by a UE, of performing a 2-step random access procedure with respect to a base station, according to an embodiment of the present disclosure.

In the case of performing general contention-based random access as described above with reference to FIG. 1D, at least four steps may be performed. When an error occurs in one step, the procedure may be further delayed. Therefore, a scenario of reducing the random access procedure to a 2-step procedure may be considered.

To this end, MsgA that consecutively transmits a preamble Msg1 1e-11 (corresponding to 1d-11) and a preamble Msg3 1e-13 (corresponding to 1 d-31) of a 4-step random access procedure is transmitted (1e-15). After that, the base station that has received MsgA receives MsgB 1e-19 including information about Msg2 (RAR) (corresponding to 1d-21) and Msg4 (corresponding to 1d-41) of the 4-step random access procedure. Therefore, the random access procedure may be reduced. This procedure is described in FIG. 1E (1e-00).

At this time, when MsgA is illustrated in time, MsgA may be the respective transmissions of Msg1 and Msg3. For example, MsgA may be transmitted through a PRACH resource 1e-21 for transmitting Msg1, a PUSCH resource 1e-23 for transmitting Msg3, and a gap resource 1e-22 for resolving an interference problem that may occur during transmission to the PUSCH resource. Also, because Msg3 includes information related to Msg1, the base station may know that Msg3 is transmitted by the UE transmitting which preamble (Msg1).

The base station that has received both Msg1 and Msg3 included in MsgA may transmit MsgB to the UE (1e-19). In this case, MsgB may include the BI described above.

On the other hand, when a collision occurs due to transmission of multiple MsgAs in operation 1e-15, the base station may receive only Msg1(s) included in MsgA and may not receive Msg3. The base station that has not received Msg3 may transmit Msg2 1e-65 to the UE, instead of MsgB 1e-19, may change to the 4-step random access procedure described with reference to FIG. 1d, and may perform the remaining random access procedure. This is described in FIG. 1E (1e-50), and a mode of switching from the 2-step random access to the 4-step random access as described above is referred to as a fallback mode.

In addition, a case in which the base station receives multiple Msg1(s) and only one Msg3 upon reception of MsgA may occur. In this case, the base station may transmit a response (i.e., MsgB 1e-19) to the UE that has received both Msg1 and Msg3 and a response (i.e., Msg2 1e-65) only to Msg1 to the UE, and different responses may be included in the same message or different messages 1e-19 and 1e-65.

When responding with different messages as in the present disclosure, the base station may include an indicator in a PDCCH 1e-17 scheduling MsgB or Msg2 and notify the UE of whether the corresponding message to be scheduled is MsgB or Msg2, thereby enabling the UE to perform decoding correctly. Alternatively, the UE or the base station may identify MsgB and Msg2 by setting the RA-RNTI value for scrambling the PDCCH so as to use a different value. In this case, an identifier for determining whether MsgB may be added in calculating the RA-RNTI may be added. The message of MsgB or Msg2 may include the BI value described above. When subsequent random access is not successful, the UE has to determine which message to use to delay preamble transmission by using the BI value included in.

In addition, when the UE does not establish a connection with the base station (for example, in order to transition from IDLE to CONNECTED) and MsgA includes a common control channel (CCCH)-related message (e.g., messages such as RRCSetupRequest, RRCResumeRequest, RRCReestablishmentRequest, RRCSystemInfoRequest, etc. of the RRC layer), MsgB may include UL transmission timing information (timing advance command (TAC)) transmitted to Msg2, an UE's temporary identifier (temporary C-RNTI) to be used in the base station by the UE, and contention resolution-related information (UE contention resolution identity) transmitted from Msg4. Also, the UE is already connected to the base station and MsgA transmits a C-RNTI MAC control element (CE) including the identifier information about the UE, the message itself that the base station allocates resources to the corresponding UE through the PDCCH as the identifier (C-RNTI) of the corresponding UE may be MsgB.

On the other hand, as described above with reference to FIG. 1D, the UE may perform random access for various purposes. For example, the UE may perform random access in order to transmit a message for connection in a state of being not connected to the base station, or in order to transmit a message for reestablishing connection when connected but disconnected due to an error. The message for reestablishing the connection may be a message belonging to a common control channel (CCCH). A control message belonging to the CCCH may include RRCSetupRequest (when transitioning from an idle mode (RRC_IDLE) to a connected mode), RRCResumeRequest (when transitioning from an inactive mode (RRC_INACTIVE) to a connected mode), RRCReestablishmentRequest (when reestablishing connection), and RRCSystemInfoRequest (when requesting system information broadcast by the base station), and the present disclosure is not limited to the above examples. When the CCCH is included in MsgA because the UE does not established a connection with the base station, MsgB may include UL transmission timing information (TAC) transmitted to Msg2, a UE's temporary identifier (temporary C-RNTI) to be used in the base station by the UE, and contention resolution related information (UE contention resolution identity) transmitted from Msg4.

On the other hand, when the UE normally accesses the base station, the UE may transmit and receive messages belonging to a dedicated control channel (DCCH) and a dedicated traffic channel (DTCH) in a connected mode (RRC_CONNECTED). The UE may request UL resource allocation by transmitting, to the base station, a 'buffer status report (BSR)' message notifying that the UE currently has data to be transmitted to a UL. To this end, the base station may allocate, to the UE, a dedicated PUCCH resource for transmission of a 'scheduling request (SR)' to a specific logical channel. In this manner, when the base station receives the SR from the UE through the PUCCH, the base station may allocate the UL resource to transmit the BSR, and when the BSR is transmitted to the corresponding UL resource, the base station may identify the buffer status of the UE and allocate the UL resource for data.

On the other hand, when the base station does not allocate the SR for the specific logical channel (a logical concept identified according to the type of control and general data), or when the SR is allocated but the BSR is not transmitted because the UL resource is not received even though the SR has been transmitted as many as the maximum number of SR transmissions, the UE may perform random access so as to transmit the BSR to Msg3.

According to an embodiment of the present disclosure, after the UE accesses the base station, when each logical channel is configured for transmission of data belonging to a DCCH and a DTCH, in the case of performing random access for transmission for the logical channel, the UE notifies a subject performing the random access by transmitting a C-RNTI MAC CE including UE identifier information in MsgA. In this case, the message itself in which the base station allocates resources to the corresponding UE through the PDCCH by using the identifier (C-RNTI) of the corresponding UE is MsgB.

FIG. 1F is a diagram illustrating a first example format of MsgB of a 2-step random access, according to an embodiment of the present disclosure.

As in the example described above, when a plurality of UEs transmit MsgA in the 2-step random access, the base station has to transmit different types of responses. That is, four pieces of information, that is, BI information, a response for a fallback mode, a response to successful reception of all MsgA, and padding, are required. At this time, only a response message may be transmitted as the response to successful reception of all MsgA. However, in order to further reduce the delay of random access, an additional message may be transmitted. The example format in this drawing is designed to transmit all responses to the above five situations in one MAC PDU.

First, in the present disclosure, an MsgB MAC PDU 1f-17 may include MAC subPDUs, and each MAC subPDU may include MAC subheaders 1f-01, 1f-03, 1f-07, 1f-09, and 1f-13. At this time, the four pieces of information may be identified by using a type field (T field in the drawing) having a length of two bits. That is, in the case of BI information, T=00 may be used. In case of a response for a fallback mode, T=01 may be used. An MsgB response to successful reception of all MsgA may use T=10. In the case of padding, T=11 may be used.

The present disclosure has been described on the assumption that all the four cases are supported by using one MsgB MAC PDU. However, when the fallback mode is supported in the existing Msg2 format, a 1-bit T field and a 1-bit E field may be located instead of the 2-bit T field. In this case, T = 0 may be set in the case of BI, T = 1 may be set in the case of the response to successful reception of all MsgA, and the E field indicates whether the present MAC subPDU is the last MAC subPDU. When the E field is used, the MAC subPDU for padding may not be required because the E field indicates the last MAC subPDU.

In the case of the MAC subPDU 1f-01 for BI, only the MAC subheader may exist. In this case, BI information including table information described above is transmitted as a 4-bit BI field. The BI MAC subPDU 1f-17 may be located at the very front of the MAC PDU, as illustrated in FIG. 1F. Of course, the present disclosure is not limited to the above examples, and the location of each MAC subPDU within the MAC PDU is not limited.

In the case of the MAC subPDU 1f-17 for padding, only the MAC subheader may exist. As illustrated in FIG. 1F, the MAC subPDU 1f-17 for padding may be located at the end of the MAC PDU, and subsequent information may all indicate padding. Of course, the present disclosure is not limited to the above examples, and the location of each MAC subPDU within the MAC PDU is not limited.

In the case of the MAC subPDUs 1f-03 and 1f-05 for the fallback mode response, the MAC subheader 1f-03 and the payload (1f-05) are transmitted in concatenation with each other. In this case, the base station may indicate the preamble index information to the MAC subheader by using 6 bits so as to notify which preamble (Msg1; 1e-61 in FIG. 1E) is a response among 64 types of preambles (for example, a RAPID field). Also, at least one of the temporary base station identifier "tempory C-RNTI (TC-RNTI field), which is the information included in the RAR message in the existing 4-step random access procedure, the information (TA command) indicating to adjust the timing of UL transmission relative to the DL signal transmitted by the base station, or the UL resource allocation information (UL grant) for subsequent transmission of Msg3 may be transmitted.

Even in the case of MAC subPDUs 1f-09 and 1f-11 for a response to successful reception of all MsgA, the MAC subheader 1f-09 and the payload 1f-11 are transmitted in concatenation with each other. Based on whether an additional message is included, when the additional message is not included, the base station may transmit the MAC subheader 1f-09 and the payload 1f-11 in concatenation with each other, and when the additional message (e.g., RRC message) is included, the base station may transmit the MAC subheader 1f-13 and the payload 1f-15 in concatenation with each other. In this case, the MAC subheader may include a 1-bit presence indicator (PI) field 1f-21, and the PI field 1f-21 indicates whether a subsequent message is included. The PI field 1f-21 may exist in the MAC subheader, as illustrated in the present drawing, or may be located in a reserved (R) field in the payload 1f-11 or 1f-15.

When the PI field 1f-21 is set to 1, a MAC PDU message format may include a container 1f-25 capable of carrying a MAC PDU for data transmission. Also, a MAC PDU for data transmission other than the Msg MAC PDU 1f-17 may be carried in the container 1f-25. The container may include a MAC PDU used to transmit a DL shared channel (DL-SCH), and may include an RRC message (SRB message). Alternatively, the container may include, in addition to the RRC message, all of MAC control element (MAC CE: MAC layer control message), general user data (DRB) information, and the like.

On the other hand, according to an embodiment of the present disclosure, without separately notifying the length of the container capable of carrying the MAC PDU, the length of each MAC subPDU is determined through the Length (L field) included in the MAC subheader 1m-13 in the MAC subPDU included in the general DL MAC PDU, and the presence of the RAR MAC subPDUs is not separately indicated later. Therefore, the MAC subPDU may be located at the end of the MAC PDU when a format including a certain message (included in the container) is used, as in the MAC MsgB 1f-15 of FIG. 1F. In this case, the MAC subPDU 1f-07 for padding described above may not be included in the MAC PDU 1f-17. When the padding is required, the padding used for the general DL MAC PDU may be located in the container 1f-25.

FIG. 1G is a diagram illustrating a modified version of the first example format of MsgB of the 2-step random access, according to an embodiment of the present disclosure.

Because the basic principle of FIG. 1G is the same as the basic principle of FIG. 1F, a description of common parts will be omitted and differences will be described.

That is, the difference from FIG. 1F is that a MAC subPDU (concatenation of 1g-13 and 1g-15) for a response to successful reception of all MsgA (also, the MAC subheader 1g-13 and the payload 1g-15 corresponding thereto may be concatenated) may further include length information 1g-27 of a DL MAC PDU container 1g-31. That is, when the PI field is 1, the DL PDU Length field 1g-27 indicating the length of the DL PDU 1g-31 is included. When a format (F) field 1g-25 included in the MAC subheader 1g-13 is 0, a 1-byte (8-bit) DL PDU Length field may be present. When the F field 1g-25 is 1, a 2-byte (16-bit) DL PDU Length field may be present and may indicate the length of the DL PDU 1g-31. Alternatively, the DL PDU Length field may be always fixed to 1 byte or 2 bytes without the F field.

In addition, in the case of FIG. 1F described above, only one MAC subPDU (concatenation of 1f-13 and 1f-15) including the DL MAC PDU is located at the end. However, in the case of FIG. 1G, because the DL PDU Length field is included, multiple MAC subPDUs 1g-13 and 1g-15 including the DL MAC PDU may be present in the MAC PDU, and may be located at any position in the MAC PDU.

FIG. 1H is a diagram illustrating a second example format of MsgB of the 2-step random access, according to an embodiment of the present disclosure.

In FIG. 1F, in the case of a MAC subPDU for a response to successful reception of all MsgA, a container 1f-25 is included. However, in a format of FIG. 1H, the same fields 1h-23 and 1h-25 as a format of a MAC subPDU included in a general downlink shared channel (DL-SCH) MAC PDU instead of the container 1f-25 may be included in an MsgB payload.

That is, the case of FIG. 1F has a structure in which the DL-SCH MAC PDU is generated and the generated MAC PDU is carried in the corresponding container. However, the case of FIG. 1H may have a structure in which each MAC service data unit (SDU) and MAC CE of the upper layer may be directly carried in the MsgB payload. The MAC SDU may carry only the SRB, or may carry all of signaling radio bearer (SRB), MAC CE, and data radio bearer (DRB).

More specifically, a 6-bit logical channel ID (LCID) field may be included so as to indicate a data type corresponding to each SDU. When only the SRB is carried in the MAC SDU, a 1-bit SRB type (ST field) indicating only the SRB type (SRB 0 or SRB 1) may be located instead of the LCID. Also, the F field is a field indicating whether each Length field is 1 byte or 2 bytes. When 1 byte or 2 bytes are always written, the F field may not be present.

According to FIG. 1H, in the case of the MAC subPDU for the response to the successful reception of all MsgA, it is not known how many SDUs (i.e., a combination of 1h-23 to 1h-25) are included. Therefore, the MAC subPDU may be located at the end of the MsgB MAC PDU. Of course, the present disclosure is not limited to the above examples.

FIG. 1I is a diagram illustrating a modified version of the second example format of MsgB of the 2-step random access, according to an embodiment of the present disclosure.

Because the basic principle of FIG. 1I is the same as the basic principle of FIG. 1H, a description of common parts will be omitted and differences will be described.

The difference from FIG. 1H is that, in the case of a MAC subPDU (concatenation of 1i-13 and 1i-15) for a response to successful reception of all MsgA, length information 1i-25 of an SDU container 1i-31 is additionally included. That is, when the PI field is 1, an SDU container Length field 1g-25 indicating a length of an SDU 1i-31 is included. When an F field included in 1g-13 is 0, a 1-byte (8-bit) DL PDU Length field may be present. When the F field is 1, a 1-byte (16-bit) SDU container Length field may be present and may indicate the length of the DL PDU 1i-31. Alternatively, the SDU container Length field may be always fixed to 1 byte or 2 bytes without the F field.

In addition, in the case of FIG. 1H described above, only one MAC subPDU (concatenation of 1h-13 and 1h-15) including the SDU is located at the end. However, in the case of FIG. 1I, because the SDU container Length field is included, multiple MAC subPDUs may be present in the MAC PDU, and may be located at any position in the MAC PDU.

FIG. 1J is a diagram illustrating a third example format of MsgB of the 2-step random access, according to an embodiment of the present disclosure.

The MsgB format illustrated in FIG. 1J is similar to the second example format (FIG. 1H) and the 2A-th example format (FIG. 11) described above, but the MsgB format illustrated in FIG. 1J is a scheme in which the number of the same R/F/LCID/Length/SDU formats (1h-23 to 1h-25 in FIG. 1H) as each MAC subPDU transmitting DL-SCH instead of the F field 1i-23 and the Length field 1i-25 of the 2A-th example format is transmitted in Num SDUs fields 1j-21 and 1j-23. The Num SDUs field may be included in the corresponding MAC subheaders 1j-09 and 1j-13.

According to an embodiment of the present disclosure, the R/F/LCID/Length/SDU formats include a 6-bit LCID field for indicating a data type corresponding to each SDU. When only the SRB is carried in the MAC SDU, a 1-bit SRB type (ST field) indicating only the SRB type (SRB 0 or SRB 1) may be located instead of the LCID. Also, the F field is a field indicating whether each Length field is 1 byte or 2 bytes. When 1 byte or 2 bytes are always written, the F field may not be present.

FIG. 1K is a diagram illustrating a fourth example format of MsgB of the 2-step random access, according to an embodiment of the present disclosure.

The MsgB format illustrated in FIG. 1K is similar to the 2A-th example format (FIG. 11), but is a format capable of carrying only an RRC message corresponding to an SRB and includes an ST (SRB Type) field 1k-25 described above, instead of the LCID field. Accordingly, in the case in which a PI field is 1 (1k-23), when the ST field is 0, a MAC subPDU includes a message corresponding to SRB 0, and when the ST field is 1, the MAC subPDU includes a message corresponding to SRB 1. In this case, a Length field may include a 7-bit or 15-bit Length field instead of a 1-bye or 2-byte Length field used in the DL-SCH format.

According to an embodiment of the present disclosure, examples of the message corresponding to SRB 0 may include RRCSetup or RRCReject, and examples of the message corresponding to SRB 1 may include RRCReestablishment or RRCResume. Alternatively, the RRCResume and RRCReconfiguration messages or the RRCReestablishment and RRCReconfiguration messages may be transmitted in concatenation with each other. FIG. 1K illustrates a scenario in which a plurality of R/F/LCID(ST)/Length/SDU formats are located.

Accordingly, a plurality of R/F/LCID(ST)/Length/SDU fields may be located. A MAC subPDU including the R/F/LCID(ST)/Length/SDU fields may still be located at the end of the MsgB MAC PDU.

In the present drawing, a scenario in which the ST field is applied to all the R/F/LCID(ST)/Length/SDU fields, but separate ST fields may be present for each of the R/F/LCID(ST)/Length/SDU fields. Also, PI fields 1k-21 and 1k-23 and the ST field 1k-25 illustrated in the present drawing may be located in a MAC subheader 1k-13.

FIG. 1L is a diagram illustrating a fifth example format of MsgB of the 2-step random access, according to an embodiment of the present disclosure.

The MsgB format of FIG. 1L is similar to the fourth example format (FIG. 1K) described above, but is a format that additionally includes Num SDUs fields 11-21 and 11-23. That is, the 2-bit Num SDUs field indicates whether MAC SDU(s) are included. When SDUs are included, the presence of up to three SDUs may be notified.

According to an embodiment of the present disclosure, the Num SDUs field 11-23 and an ST field may be included in a MAC subheader. Also, the ST field in the present drawing may be added for each MAC SDU. Also, because the number of MAC subPDUs is notified through the Num SDUs field 11-23, a MAC subPDU (concatenation of 11-13 and 11-15) including the MAC SDU may be located at any position in an MsgB MAC PDU. MsgB may include a plurality of MAC subPDUs (concatenation of 11-13 and 11-15) including MAC SDUs.

FIG. 1M is a diagram illustrating a sixth example format of MsgB of the 2-step random access, according to an embodiment of the present disclosure.

The MsgB format illustrated in FIG. 1M is the same as described above in that the Type field is used. However, when MsgA is all successfully received and a response thereto is transmitted (1m-09 and 1m-11), immediately subsequent MAC subPDUs (i.e., MAC subPDUs from MAC subPDU 4 1m-23 to MAC subPDUx 1m-25 in an MsgB MAC PDU Format 1m-17) are not the MAC subPDU used for RAR, and MAC subPDUs used for DL-SCH transmission may be located.

That is, as in the previous embodiments, the MsgB MAC subPDU does not include a DL-SCH MAC PDU or a DL-SCH MAC subPDU, but according to FIG. 1M, MsgB is configured by concatenating MAC subPDUs of DL-SCH immediately subsequent to the MsgB MAC subPDU. The MAC subPDU of the DL-SCH may include a subheader 1m-13. Also, according to another embodiment, the subheader 1m-13 may have a Length field having a fixed length without an F field.

Therefore, when N DL-SCH MAC subPDUs are indicated in the Num SDUs field 1m-21, N DL-SCH MAC subPDUs are concatenated after the MAC subPDU (concatenation of 1m-09 and 1m-11) transmitting a response to successful reception of all MsgA, and a MAC subPDU of the RAR may be present again after the N DL-SCH MAC subPDUs.

Also, according to an embodiment of the present disclosure, the Num SDUs field 1m-21 may be located in the R field of the payload (i.e., 1m-11). Also, when only one DL-SCH MAC subPDU supports only the format included in MsgB, the length of the Num SDUs field may be 1 bit.

As in the other embodiments described above, when the fallback is not included, the MsgB format of FIG. 1M may include a 1-bit T field and a 1-bit E field, instead of the 2-bit T field.

FIG. 1N is a diagram illustrating a modified version of the sixth example format of MsgB of the 2-step random access, according to an embodiment of the present disclosure.

The MsgB format illustrated in FIG. 1N is similar to the sixth example format (FIG. 1M) described above, but indicates that a packet corresponding to SRB0 or SRB 1 is transmitted by using an ST field so as to more simply transform a subheader for a DL-SCH MAC subPDU, and a subheader 1m-13 of the DL-SCH MAC subPDU may include only F and Length fields. In addition, the F field may also be omitted when the Length field having a fixed size is used.

Also, a Num SDUs field 1n-21 and an ST field in the present drawing may be included in a payload 1n-11 instead of a MAC subheader 1n-09.

FIG. 1O is a diagram illustrating a seventh format of MsgB of the 2-step random access, according to an embodiment of the present disclosure.

The MsgB format illustrated in FIG. 1O is similar to the sixth example format (Fig. 1M) described above. However, a PI field 1o-21 previously used is shown instead of the Num SDUs field, and an S field 1o-23 is added to each subheader 1o-13 of each MAC subPDU so as to indicate whether a MAC subPDU subsequent to the corresponding MAC subPDU includes a MAC SDU. Alternatively, whether a certain MAC subPDU is the last DL-SCH MAC subPDU in the MsgB may be indicated to indicate that the MAC subPDU after the certain MAC subPDU is a RAR MAC subPDU. As in the other embodiments described above, in the MsgB format of FIG. 1O, the fixed Length field may be used and the F field may be omitted.

FIG. 1P is a diagram illustrating a modified version of the seventh example format of MsgB of the 2-step random access, according to an embodiment of the present disclosure.

The MsgB format illustrated in FIG. 1P is similar to the sixth example format (Fig. 1M) described above, but a PI field 1p-21 and an ST field 1p-23 previously used are shown instead of the Num SDUs field, and may indicate whether SRB0 or SRB1 through the ST field 1p-23. Also, in a subheader 1p-13 of a subsequent DL-SCH MAC subPDU, whether SRB0 or SRB1 may be indicated by using the ST field 1p-23 in the MAC subheader instead of the LCID. Also, the S field 1p-25 described with reference to FIG. 1o is included in the subheader 1p-13 of each DL-SCH MAC subPDU, and may include information capable of confirming whether it is the last DL-SCH MAC subPDU, and the F field 1p-27 may be included according to whether the Length field is variable.

FIG. 1Q is a diagram illustrating an eighth format of MsgB of the 2-step random access, according to an embodiment of the present disclosure.

According to an embodiment of the present disclosure, both the BI MAC subPDU and the fallback MAC subPDU are transmitted in the existing Msg2 format. For MsgB transmission, only a response message to successful reception of all MsgA may be transmitted. The MsgB format illustrated in FIG. 1Q may be an MsgB format that transmits only a response message to successful reception of all MsgA.

In this case, because only one type of RAR MAC subPDU is transmitted in the corresponding MAC PDU, the Type field (TI field) does not need to be present. When the scenario of transmitting multiple successful RAR MAC subPDUs is supported, an E field (1q-21) may be present to notify that the transmission of the RAR MAC subPDU is the end. When only one successful RAR MAC subPDU is transmitted in the MAC PDU, the E field may not be included.

When RRC or general data is transmitted together with MsgB, an N field 1q-23 indicating the number of corresponding DL-SCH MAC subPDUs may be included. The N field 1q-23 may indicate the number of subsequent DL-SCH MAC subPDUs. According to an embodiment of the present disclosure, in the case in which the E field 1q-21 is present, when the value of the N field 1q-23 is 1 or more even when the E field 1q-21 is 1, the indicated number of DL-SCH MAC subPDUs may be located. The DL-SCH MAC subPDU may include a MAC subheader 1q-05 illustrated in FIG. 1Q.

The N field 1q-23 may be included in R bits of a payload 1q-03. Also, the length of the N field may be 1 bit or more according to the number of DL-SCH MAC subPDUs. When only one DL-SCH MAC subPDU is subsequent, it may be replaced with a 1-bit PI field instead of the name of the N field. Also, the F field in the DL-SCH MAC subheader 1q-05 may also be omitted when the Length field having a fixed length is used.

FIG. 1R is a diagram illustrating a ninth format of MsgB of the 2-step random access, according to an embodiment of the present disclosure.

The MsgB format of Fig. 1R is similar to the eighth example format (Fig. 1Q) described above, but only a PI field 1r-23 is located instead of the N field, an S field 1r-25 may be present in a MAC subPDU corresponding to each DL-SCH, and the S field 1r-25 may indicate whether the DL-SCH MAC subPDU is the end. The PI field 1r-23 may be located in a payload 1r-03. When only one DL-SCH MAC subPDU is subsequent, the S field 1r-25 is not required. This is the same structure as described with reference to FIG. 1Q.

On the other hand, the MsgB MAC PDU formats illustrated in FIGS. F to 1R have a completely different format from the Msg2 MAC PDU (that is, MAC PDU including RAR: defined in 3GPP TS 38.321) used in the existing 4-step random access procedure. Therefore, in the case in which a resource transmitting Msg1 in MsgA of the 2-step random access and a physical resource transmitting Msg1 of the 4-step random access are shared, when the UE that has performed 4-step random access receives the MsgB MAC PDU described above, the received contents may not be understood, thus causing reception error. To prevent this situation, there is a need to prevent the UE performing the existing 4-step random access from seeing the corresponding message when the PDCCH 1e-17 for MsgB transmission of FIG. 1E is transmitted in order to receive the MsgB MAC PDU formats described above. To this end, the UE that has performed the 2-step random access may receive the PDCCH for MsgB by calculating an RA-RNTI using the following equation.

$$RA\text{-}RNTI = Offset + t\_id \text{ (Equation 2)}$$

or

$$RA\text{-}RNTI = Offset + subframe\_id \text{ (Equation 3)}$$

In the above equations, Offset is a value equal to or greater than a maximum value that is allowable in Equation 1 above, t_id represents a slot identifier that has transmitted Msg1 or Msg3 of MsgA, and subframe_id represents a subframe identifier that has transmitted Msg1 or Msg3 of MsgA.

According to an embodiment of the present disclosure, the base station may separate the resource transmitting the PDCCH 1e-17 for MsgB transmission of FIG. 1E and the resource transmitting the PDCCH for Msg2 for the existing 4-step random access. That is, a search space in which the PDCCH for MsgB transmission is transmitted may be separately set. In this case, the PDCCH for MsgB may be received by using Equation 1 as it is without using equations such as Equations 2 and 3. Because the existing UE is not able to monitor the PDCCH for MsgB, the above-described reception error problem does not occur. When there is no separate PDCCH, the reception error problem may be avoided by using a new RA-RNTI that the existing UE is not able to receive, as in Equations 2 and 3.

FIG. 1S is a diagram illustrating an example of a TAC MAC CE format, according to an embodiment of the present disclosure.

On the other hand, the MsgB MAC PDU formats illustrated in FIGS. F to 1R described above may be MsgB used when the UE performs random access so as to transition from an RRC_IDLE state or an RRC_INACTIVE state to a connected mode (RRC_CONNECTED state. However, when the UE performs random access in the RRC_CONNECTED mode, the random access succeeds simply by transmitting the PDCCH scrambled by the base station identifier (C-RNTI) that the UE already has, instead of the PDCCH 1e-17 and MsgB 1e-19 of FIG. E.

However, one of the main reasons for performing random access in the connected mode is to receive UL transmission timing information from the base station. In the existing 4-step contention or non-contention base, the UL timing is controlled with a 12-bit (absolute value) timing advance (TA) command value included in Msg2 (RAR). That is, the UL transmission timing is adjusted by the TA command relative to the DL signal transmitted by the base station. However, in the case of the 2-step random access, when only PDCCH is received through MsgB, the necessary TA command may not be received as described above.

To solve this, you several methods may be considered. The first method is to transmit a PDCCH by including a 12-bit TA command in the PDCCH. This method has an advantage that it is possible to complete MsgB by transmitting only the PDCCH.

The second method is to concatenate two MAC CEs including an existing 6-bit TA command (having a relative value) illustrated in FIG. 1S and transmit the concatenated MAC CEs (Format 1: 1s-05). In this case, the existing 6-bit TA command is a relative value that adjusts the transmission timing relatively sooner or later than the TA value the UE has originally. However, in the present disclosure, when two TAC MAC CEs including the same TAG ID are used in concatenation with each other, 6 bits thereof are interpreted in concatenation with each other, and interpreted as an absolute value included in 12-bit Msg2/MsgB. That is, 6 bits of the TAC MAC CE located in the front among the two concatenated TAC MAC CEs may be interpreted as the first 6 bits among a total of 12 bits, and 6 bits of the TAC MAC CE located at the back may be interpreted as the last 6 bits (or the first 6 bits) among a total of 12 bits. Because this method does not additionally consume an LCID for a TAC MAC CE, the consumption of the LCID may be reduced.

When the LCID is additionally defined, a TAC MAC CE having a 12-bit TA command such as format 2 1s-15 or format 3 1s-25 may be separately defined. In format 2, a TAG ID 1s-11 is included to explicitly notify to which TAG ID this corresponds. In format 3, the TAG ID may be omitted to limit use only in random access. It implicitly indicates that it is a TA command for a TAG to which the cell transmitting the preamble belongs.

On the other hand, in the present disclosure, the contention-based 4-step and 2-step random access procedures have been mainly described. When there is a collision when random access is performed with other UEs at the same time, retransmission of Msg1 or MsgA may be required. In this case, the priority of random access may be increased by additionally setting parameters according to the purpose of the random access. For example, the priority needs to be changed when the beam transmitted from the base station changes rapidly and needs to be recovered (beam failure recovery (BFR)) or when the UE moves to another base station (handover). In this case, for example, the priority may be given by setting the BI value to be short or by further increasing the transmission power used for the retransmission of the random access preamble. For example, when the UE receives 80 ms as the BI value, the UE randomly selects a value between 0 ms and 80 ms and delays the preamble transmission by the selected value. In the case of the BFR and the handover, a scaling value may be transmitted so that the base station transmits a separate parameter and applies half or 1/4 of the received BI or does not apply the BI value. In the above-described example, when the scaling value is 1/2, the UE randomly selects a value between 0 ms and 40 ms by adjusting the BI value to 80/2 = 40 ms, and delays the preamble transmission by the selected value, thereby reducing transmission delay. Also, in the case of transmission power, the transmission success rate may be further increased by, for example, doubling the power value than the value indicated by the base station. As described above, parameters for increasing the random access priority are referred to as random access prioritisation parameters (RAPPs).

Assuming that the RAPP of the base station is transmitted to the UE, the following three methods may be considered for increasing the priority even in the case of 2-step (contention-based) random access.

The first method is to separately transmit the RAPP value of the 4-step random access and the RAPP value of the 2-step random access when the base station transmits an RRC message to the UE to set the BFR and handover related parameters. According to this method, the base station may increase the degree of operational freedom by separately setting the parameters of the 2-step and 4-step random accesses, but overhead may be slightly increased.

The second method is to reuse the RAPP used for the existing 4-step random access and equally applies the RAPP to the 2-step random access. According to this method, the degree of freedom is slightly decreased, but overhead is not additionally increased.

In the third method, the base station may provide separate parameters for each random access method, as in the first method. However, when the RAPP related to the 2-step random access is not given, the parameters related to the 4-step random access are equally used. When there is no RAPP related to the 4-step random access, the UE does not use RAPP in all random access procedures (2-step and 4-step).

Also, when the UE supporting both the 2-step random access and the 4-step random access has to perform random access, it is necessary to determine whether to perform the 2-step random access or the 4-step random access.

When the UE is in the RRC_IDLE or RRC_INACTIVE state, the UE may perform random access so as to request system information (SI). However, this has lower priority than other cases. Therefore, the base station may limit the UE to perform the 2-step random access in the corresponding case. For example, in the SIB1 message among the SI messages broadcast to the UE in the cell, the base station may indicate whether it is possible to perform 2-step random access for the SI request. Alternatively, the base station may separately indicate whether the 2-step random access is usable for each case such as an SI request, connection establishment, and connection reestablishment.

When the UE is in the RRC_CONNECTED state/mode and the 2-step random access is configured, the UE uses/performs the 2-step random access only for the BFR and the handover (having important priority) described above; otherwise, the UE may be configured (or defined) to perform the 4-step random access. Alternatively, whether the base station is able to perform the 2-step random access upon BFR and handover may be indicated through a separate indicator when the BFR and handover related parameters are set to the UE in an RRC message. In other cases, in all other cases, a method of performing the 4-step random access may also be considered. In this manner, the base station may reduce collision and congestion by controlling the usage of the 2-step random access.

FIG. 1T is a block diagram illustrating an architecture of a UE in a wireless communication system, according to an embodiment of the present disclosure.

Referring to FIG. 1T, the UE includes a radio frequency (RF) processor 1t-10, a baseband processor 1t-20, a storage 1t-30, and a controller 1t-40. Of course, the present disclosure is not limited to the above example, and the UE may include fewer elements or more elements than the elements illustrated in FIG. 1T.

The RF processor 1t-10 performs functions for transmitting and receiving signals through a radio channel, such as signal band conversion, amplification, etc. That is, the RF processor 1t-10 may up-convert a baseband signal provided from the baseband processor 1t-20 into an RF band signal and transmit the RF band signal through an antenna, and may down-convert an RF band signal received through an antenna into a baseband signal. For example, the RF processor 1t-10 may include a transmission filter, a reception filter, an amplifier, a mixer, an oscillator, a digital-to-analog converter (DAC), an analog-to-digital converter (ADC), and the like. Although only one antenna is illustrated in FIG. 1T, the UE may include a plurality of antennas. Also, the RF processor 1t-10 may include a plurality of RF chains. Also, the RF processor 1t-10 may perform beamforming. For beamforming, the RF processor 1t-10 may adjust the phases and magnitudes of signals transmitted and received through a plurality of antennas or antenna elements.

The baseband processor 1t-20 may perform a conversion function between a baseband signal and a bit string according to a physical layer standard of a system. For example, upon transmission of data, the baseband processor 1t-20 may encode and modulate a transmission bit string to generate complex symbols. Also, upon reception of data, the baseband processor 1t-20 may reconstruct the reception bit string by demodulating and decoding the baseband signal provided from the RF processor 1t-10. For example, in the case of conforming to an OFDM scheme, upon transmission of data, the baseband processor 1t-20 may encode and modulate the transmission bit string to generate complex symbols, map the complex symbols to sub-carriers, and configure OFDM symbols through an inverse fast Fourier transform (IFFT) operation and cyclic prefix (CP) insertion. Also, upon reception of data, the baseband processor 1t-20 may segment the baseband signal provided from the RF processor 1t-10 in units of OFDM symbols, reconstruct signals mapped to sub-carriers through a fast Fourier transform (FFT) operation, and reconstruct a reception bit string through demodulation and decoding.

The baseband processor 1t-20 and the RF processor 1t-10 may transmit and receive signals as described above. Therefore, the baseband processor 1t-20 and the RF processor 1t-10 may be referred to as a transmitter, a receiver, a transceiver, or a communicator. Furthermore, at least one of the baseband processor 1t-20 and the RF processor 1t-10 may include a plurality of communication modules so as to support a plurality of different radio access technologies. Also, at least one of the baseband processor 1t-20 and the RF processor 1t-10 may include different communication modules so as to process signals of different frequency bands. For example, the different radio access technologies may include a wireless LAN (e.g., IEEE 802.11), a cellular network (e.g., LTE), etc. Also, the different frequency bands may include a super high frequency (SHF) (e.g., 2.5 GHz, 5GHz) band and a millimeter wave (e.g., 60 GHz) band. The UE may transmit and receive signals to and from the base station by using the baseband processor 1t-20 and the RF processor 1t-10, and the signals may include control information and data.

The storage 1t-30 may store data such as basic programs, application programs, and configuration information for the operations of the UE. In particular, the storage 1t-30 may store information related to a second access node that performs wireless communication using a second radio access technology. The storage 1t-30 may provide stored data in response to the request of the controller 1t-40. The storage 1t-30 may include a storage medium such as read-only memory (ROM), random access memory (RAM), hard disk, compact disc read-only memory (CD-ROM), and digital versatile disc (DVD), or any combination thereof. Also, the storage 1t-30 may include a plurality of memories. According to an embodiment of the present disclosure, the storage 1t-30 may perform the 2-step random access procedure according to the present disclosure, and may store a program for performing the method of setting, generating, and transmitting the MsgB format described above.

The controller 1t-40 may control overall operations of the UE. For example, the controller 1t-40 may transmit and receive signals through the baseband processor 1t-20 and the RF processor 1t-10. Also, the controller 1t-40 may record data in the storage 1t-40 and read data from the storage 1t-40. To this end, the controller 1t-40 may include at least one processor. For example, the controller 1t-40 may include a communication processor (CP) that performs control for communication, and an application processor (AP) that controls an upper layer, such as an application program. Also, at least one element in the UE may be implemented as a single chip. Also, according to an embodiment of the present disclosure, the controller 1t-40 may include a multiple connection processor 1t-42 that performs a process for operating in a multiple connection mode. For example, the controller 1t-40 may perform control so that the UE performs the procedure illustrated in the operation of the UE illustrated in FIG. 1E.

According to an embodiment of the present disclosure, when the 2-step random access is triggered, the controller 1t-40 may indicate to calculate RA-RNTI for receiving a response message to the transmitted MsgA and receive the corresponding response message.

FIG. 1U is a block diagram illustrating an architecture of a base station, according to an embodiment of the present disclosure.

Referring to FIG. 1U, the base station may include an RF processor 1u-10, a baseband processor 1u-20, a communicator 1u-30, a storage 1u-40, and a controller 1u-50. Of course, the present disclosure is not limited to the above example, and the base station may include fewer elements or more elements than the elements illustrated in FIG. 1U.

The RF processor 1u-10 may perform functions for transmitting and receiving signals through a radio channel, such as signal band conversion, amplification, etc. The RF processor 1u-10 may up-convert a baseband signal provided from the baseband processor 1u-20 into an RF band signal and transmit the RF band signal through an antenna, and may down-convert an RF band signal received through an antenna into a baseband signal. For example, the RF processor 1u-10 may include a transmission filter, a reception filter, an amplifier, a mixer, an oscillator, a DAC, an ADC, and the like. Although only one antenna is illustrated in FIG. 1U, the RF processor 1u-10 may include a plurality of antennas. Also, the RF processor 1u-10 may include a plurality of RF chains. Also, the RF processor 1u-10 may perform beamforming. For beamforming, the RF processor 1u-10 may adjust the phases and magnitudes of signals transmitted and received through a plurality of antennas or antenna elements. The RF processor 1u-10 may perform a DL MIMO operation by transmitting one or more layers.

The baseband processor 1u-20 may perform a conversion function between a baseband signal and a bit string according to a physical layer standard of a certain radio access technology. For example, upon transmission of data, the baseband processor 1u-20 may encode and modulate a transmission bit string to generate complex symbols. Also, upon reception of data, the baseband processor 1u-20 may reconstruct a reception bit string by demodulating and decoding the baseband signal provided from the RF processor 1u-10. For example, in the case of conforming to an OFDM scheme, upon transmission of data, the baseband processor 1u-20 may encode and modulate the transmission bit string to generate complex symbols, map the complex symbols to sub-carriers, and configure OFDM symbols through an IFFT operation and CP insertion. Also, upon reception of data, the baseband processor 1u-20 may segment the baseband signal provided from the RF processor 1u-10 in units of OFDM symbols, reconstruct signals mapped to subcarriers through an FFT operation, and reconstruct a reception bit string through demodulation and decoding. The baseband processor 1u-20 and the RF processor 1u-10 may transmit and receive signals as described above. Therefore, the baseband processor 1u-20 and the RF processor 1u-10 may be referred to as a transmitter, a receiver, a transceiver, a communicator, or a wireless communicator. The base station may transmit and receive signals to and from the UE by using the baseband processor 1u-20 and the RF processor 1u-10, and the signals may include control information and data.

The communicator 1u-30 may provide an interface for performing communication with other nodes in the network. That is, the communicator 1u-30 may convert a bit string transmitted from a main base station to another node, for example, an auxiliary base station, a core network, etc., into a physical signal, and convert a physical signal received from the other node into a bit string. The communicator 1u-30 may be a backhaul communicator.

The storage 1u-40 may store data such as basic programs, application programs, and configuration information for the operations of the base station. The storage 1u-40 may store information about bearers allocated to the connected UE, measurement results reported from the connected UE, etc. Also, the storage 1u-40 may store information that is the criterion for determining whether to provide multiple connections to the UE or to stop multiple connections. The storage 1u-40 may provide stored data in response to the request of the controller 1u-50. The storage 1u-40 may include a storage medium such as ROM, RAM, hard disk, CD-ROM, and DVD, or any combination thereof. Also, the storage 1u-40 may include a plurality of memories. According to some embodiments, the storage 1u-40 may perform the 2-step random access procedure according to the present disclosure, and may store a program for performing the method of setting, generating, and transmitting the MsgB format described above.

The controller 1u-50 may control overall operations of the base station. For example, the controller 1i-50 may transmit and receive signals through the baseband processor 1u-20 and the RF processor 1u-10 or through the communicator 1u-30. Also, the controller 1u-50 may record data in the storage 1u-40 and read data from the storage 1u-40. To this end, the controller 1u-50 may include at least one processor. Also, at least one element in the base station may be implemented as a single chip. Also, the respective elements of the base station may operate to perform the above-described embodiments of the present disclosure.

FIG. 1V is a diagram illustrating a tenth format of MsgB of the 2-step random access, according to an embodiment of the present disclosure.

According to an embodiment of the present disclosure, the BI MAC subPDU, the fallback MAC subPDU, and the response message (success MAC subPDU) to the successful reception of all MsgA may be transmitted in one MsgB. To this end, a Type field 1v-23 having a length of 1/2/3 (1, 2, or 3) bits may be present. Also, according to an embodiment of the present disclosure, an E field 1v-21 may be included in MsgB. The E field 1v-21 may be a field indicating information indicating that there is no extension of the transmission of the RAR MAC subPUD (that is, it is the end).

In FIG. 1V, it may be assumed that an MsgB MAC PDU 1v-17 includes only MAC SDU(s) (e.g., SRBO or SRB1) transmitted to one UE.

In this case, as one method, a method of including a plurality of MAC SDUs transmitted to a specific UE without a separate indicator in the subheader of the success MAC subPDU may be considered. That is, the base station may include MAC SDUs including a general MAC subheader 1v-05 following the MAC MsgB without a separate indicator.

For example, in the case in which RRC or general data is transmitted together with MsgB, it indicates that the E field of the MAC subheader of MsgB is the end (0). In the case in which the Type field indicates success MAC subPDU, when the remaining resources are greater than or equal to a certain byte, the UE may attempt to decode a certain byte following the corresponding MAC MsgB on the assumption that it is the subheader of the general MAC SDU (1v-05), despite indicating that field E is the end, in order to determine whether an additional MAC SDU transmitted to the corresponding UE is present. For example, the size of the subheader may be at least 2 bytes. When 2 bytes or more of resources remain, the UE may attempt decoding so as to determine whether an additional MAC SDU is present, despite indicating that the E field is the end.

When all the certain bytes (e.g., 2 bytes) have a value of 0 or when all LCID values are set to 1, the UE may determine all subsequent bytes as padding. Otherwise, the UE considers that data is present and may decode the data by interpreting the LCID and the Length fields in the same manner as in the method of decoding the general MAC subheader. Also, because concatenated MAC SDUs may be present after the MAC SDU, 2 bytes following the MAC SDU are decoded in the same manner as described above to determine whether data is present.

Also, according to an embodiment of the present disclosure, the BI MAC subPDU, the fallback MAC subPDU, and the response message (success MAC subPDU) to the successful reception of all MsgA may be transmitted in one MsgB. To this end, a Type field 1v-23 having a length of 1/2/3 bits may be present. Also, according to an embodiment of the present disclosure, an E field 1v-21 may be included in MsgB. The E field 1v-21 may be a field indicating information indicating that there is no extension of the transmission of the RAR MAC subPUD (that is, it is the end).

In FIG. 1V, it may be assumed that an MsgB MAC PDU 1v-17 includes only MAC SDU(s) (e.g., SRBO or SRB1) transmitted to one UE.

In this case, as another method, a method in which only an indicator indicating whether MAC SDU(s) is present in the subheader of the successRAR MsgB subPDU may be considered. That is, the base station may not include the number of MAC SDUs transmitted to one UE, may only indicates the presence or absence thereof, and may include MAC SDU(s) including the general MAC subheader 1v-05 following the successRAR MsgB subPDU. The method of notifying the presence or absence may use the PI field as described above. Or the presence or absence may be notified by a method in which only the successRAR MsgB subPDU is transmitted by using a value in a separate Type field, or a method where MAC SDU including the successRAR MsgB subPDU and the general MAC subheader 1v-05 is transmitted.

The UE that has identified the presence or absence of the MAC SDU(s) may receive the corresponding successRAR MsgB subPDU and decode the corresponding data considering the Length field on the assumption that the certain subsequent byte (e.g., 1 byte) is the general MAC subheader. When the size of the data remaining thereafter is greater than or equal to a certain number of bytes (e.g., 2 bytes), the UE decodes the data on the assumption that the subsequent certain byte is the normal MAC subheader, in order to determine whether the additional MAC SDU is present following the data. When the corresponding MAC subheader indicates padding used for the normal DL MAC PDU (that is, when the LCID is Ob111111), the UE determines that there is no additional data. Otherwise, the UE determines that the additional MAC SDU is present and decodes the corresponding data. The above operation may be continuously repeated.

On the other hand, although not illustrated in the present drawing, the case in which only the successRAR MsgB subPDU is transmitted by using the 2-bit Type field and additionally using the PI field as illustrated in FIG. 1H, without using the E field as in the example drawing, and the case in which the MAC SDU (e.g., SRBO or SRB1) including the successRAR MsgB subPDU and the general MAC subheader 1v-05 is transmitted may be identified.

In this case, it may be assumed that the MAC SDU including the general MAC subheader 1v-05 is located at the end, as in FIG. 1H. Accordingly, the UE that has transmitted MsgA corresponding to the successRAR MsgB subPDU may decode data on the assumption that a certain byte (e.g., 1 byte) subsequent to the PI field is the general MAC subheader. When the size of the data remaining thereafter is greater than equal to a certain number of bytes (e.g., 2 bytes), the UE decodes the data on the assumption that the subsequent 1 byte is the MsgB subPDU, in order to determine whether the additional MAC SDU is present following the data. That is, it may be determined whether the Type field indicates padding set to Ob11. When it is not Ob11 (that is, when indicating padding), the UE may determine that there is no additional data. Otherwise, the UE may determine that an additional MAC SDU is present and may decode the corresponding byte on the assumption of data including the general MAC subehader. The above operation may be continuously repeated.

The methods according to the embodiments of the present disclosure, which are described in the claims or the detailed description, may be implemented as hardware, software, or a combination of hardware and software.

When implemented as software, a computer-readable storage medium storing one or more programs (software modules) may be provided. One or more programs stored in the computer-readable storage medium are configured to be executable by one or more processors in an electronic device. One or more programs include instructions that cause the electronic device to execute the methods according to the embodiments of the present disclosure, which are described in the claims or the specification of the present disclosure.

One or more programs (software modules, software, etc.) may be stored in RAM, non-volatile memory including flash memory, ROM, electrically erasable programmable read only memory (EEPROM), magnetic disc storage device, CD-ROM, DVD, other types of optical storage devices, or magnetic cassette. Alternatively, one or more programs may be stored in a memory provided by a combination of all or part of these devices. Also, each memory may include a plurality of configured memories.

Also, one or more programs may be stored in an attachable storage device that is accessible through a communication network such as Internet, intranet, local area network (LAN), wide LAN (WLAN), or storage area network (SAN), or communication network provided by a combination thereof. These storage devices may be connected through an external port to a device that performs the embodiments of the present disclosure. Also, a separate storage device on the communication network may access the device that performs the embodiment of the present disclosure.

In specific embodiments of the present disclosure, the elements included in the present disclosure have been expressed in the singular or plural form according to the suggested specific embodiments of the present disclosure. However, the expression in the singular or plural form is appropriately selected according to the suggested situations for convenience of explanation and is not intended to limit the present disclosure to the single or plural elements. Even when a certain element is expressed in the plural form, it may be provided with a single element, and even when a certain element is expressed in the singular form, it may be provided with a plurality of elements.

On the other hand, although specific embodiments have been described in the detailed description of the present disclosure, various modifications may be made thereto without departing from the scope of the present disclosure. Therefore, the scope of the present disclosure should not be limited to the described embodiments and should be defined by the following claims and the equivalents thereto. That is, it will be obvious to those of ordinary skill in the art that other modifications based on the technical idea of the present disclosure may be made. In addition, the respective embodiments may be operated in combination with each other as necessary. For example, parts of one embodiment and another embodiment of the present disclosure may be combined with each other so that the base station and the UE operate. In addition, although the above embodiments have been presented based on 5G and NR systems, other modifications based on the technical idea of the embodiments may be implemented in other systems such as LTE, LTE-A, and LTE-A-Pro systems.

**Claims**

1. A method, performed by a user equipment (UE), of performing a random access procedure, the method comprising:

   receiving random access configuration information from a base station; and
   performing a 2-step random access procedure or a 4-step random access procedure with respect to the base station, based on the configuration information,
   wherein the random access configuration information includes both parameter information for the 2-step random access procedure and parameter information for the 4-step random access procedure.

2. The method of claim 1, wherein the receiving of the random access configuration information from the base station comprises:

   receiving the parameter information for the 2-step random access procedure and the parameter information for the 4-step random access procedure through separate messages or a single message,
   wherein the parameter information for the 2-step random access procedure includes a beam failure recovery-related 2-step random access priority parameter and a handover-related 2-step random access priority parameter, and
   wherein the parameter information for the 4-step random access procedure includes a beam failure recovery-related 4-step random access priority parameter and a handover-related 4-step random access priority parameter.

3. The method of claim 1, wherein the performing of the 2-step random access procedure further comprises:

   transmitting Msg A to the base station; and
   receiving Msg B including a media access control (MAC) protocol data unit (PDU) from the base station,
   wherein the MAC PDU includes at least one MAC subPDU, and
   wherein the at least one MAC subPDU includes at least one of a MAC subPDU including a backoff indicator (BI), a MAC subPDU including a response to successful reception of the Msg A, a MAC subPDU including a fallback random access response (RAR), a MAC subPDU including a MAC service data unit (SDU) for a radio resource control (RRC) message, and a MAC subPDU for padding.

4. The method of claim 3, wherein the MAC subPDU including the response to the successful reception of the Msg A includes information indicating presence of the MAC subPDU including the MAC SDU for the RRC message.

5. The method of claim 4, wherein the information indicating presence of the MAC subPDU including the MAC SDU for the RRC message is included in a MAC subheader of the MAC subPDU including the response to the successful reception of the Msg A.

6. The method of claim 3, wherein the MAC subPDU for the padding is located at an end of the MAC PDU.

7. The method of claim 3, wherein the MAC subPDU including the MAC SDU for the RRC message is located in concatenation with the MAC subPDU including the response to the successful reception of the Msg A.

8. A method, performed by a base station, of performing a random access procedure, the method comprising:

   transmitting random access configuration information to a user equipment (UE); and
   performing a 2-step random access procedure or a 4-step random access procedure with respect to the UE based on the configuration information,
   wherein the random access configuration information includes both parameter information for the 2-step random access procedure and parameter information for the 4-step random access procedure.

9. The method of claim 8, wherein the transmitting of the random access configuration information to the UE comprises transmitting the parameter information for the 2-step random access procedure and the parameter information for the 4-step random access procedure through separate messages or a single message, and
   the parameter information for the 2-step random access procedure includes a beam failure recovery-related 2-step random access priority parameter and a handover-related 2-step random access priority parameter, and the parameter information for the 4-step random access procedure includes a beam failure recovery-related 4-step random access priority parameter and a handover-related 4-step random access priority parameter.

10. The method of claim 8, wherein the performing of the 2-step random access procedure further comprises:

    receiving Msg A from the UE; and
    transmitting Msg B including a media access control (MAC) protocol data unit (PDU) to the UE,
    the MAC PDU includes at least one MAC subPDU, and
    the at least one MAC subPDU includes at least one of a MAC subPDU including a backoff indicator (BI), a MAC subPDU including a response to successful reception of the Msg A, a MAC subPDU including a fallback random access response (RAR), a MAC subPDU including a MAC service data unit (SDU) for a radio resource control (RRC) message, and a MAC subPDU for padding.

11. The method of claim 10, wherein the MAC subPDU including the response to the successful reception of the Msg A includes information indicating presence of the MAC subPDU including the MAC SDU for the RRC message.

12. The method of claim 10, wherein the MAC subPDU for the padding is located at an end of the MAC PDU.

13. The method of claim 10, wherein the MAC subPDU including the MAC SDU for the RRC message is located in concatenation with the MAC subPDU including the response to the successful reception of the Msg A.

14. A user equipment (UE) for performing a random access procedure, the UE comprising:

    a transceiver; and
    a processor configured to receive random access configuration information from a base station and perform a 2-step random access procedure or a 4-step random access procedure with respect to the base station based on the configuration information,
    wherein the random access configuration information includes both parameter information for the 2-step random access procedure and parameter information for the 4-step random access procedure.

15. A base station for performing a random access procedure, the base station comprising:

    a transceiver; and
    a processor configured to transmit random access configuration information from a user equipment (UE) and perform a 2-step random access procedure or a 4-step random access procedure with respect to the UE based on the configuration information,

wherein the random access configuration information includes both parameter information for the 2-step random access procedure and parameter information for the 4-step random access procedure.

# FIG. 1A

# FIG. 1B

UE                                      LTE/eNB

| | |
|---|---|
| 1b-05 — | PDCP |
| 1b-10 — | RLC |
| 1b-15 — | MAC |
| 1b-20 — | PHY |

| | |
|---|---|
| 1b-40 — | PDCP |
| 1b-35 — | RLC |
| 1b-30 — | MAC |
| 1b-25 — | PHY |

FIG. 1C

1c-01

Beam #3

1c-17

Beam #2

1c-15

1c-45

4 symbols

1c-41

12 PRBs

PSS | PBCH | SSS | PBCH

20 PRBs

Beam #1

1c-03

1c-13

Beam #0

1c-11

1c-43

frequency

1c-21

1c-23

Downlink

| SSB #0 | SSB #1 | | SSB #2 | SSB #3 | | | | | | |

1c-25   1c-27

Uplink

| PRACH Occasion for SSB #0 | PRACH Occasion for SSB #0 | PRACH Occasion for SSB #1 | PRACH Occasion for SSB #1 | PRACH Occasion for SSB #2 | PRACH Occasion for SSB #2 | PRACH Occasion for SSB #3 | PRACH Occasion for SSB #3 | PRACH Occasion for SSB #0 | PRACH Occasion for SSB #0 |

time

1c-30   1c-31   1c-32   1c-33   1c-34   1c-35   1c-36   1c-37   1c-38   1c-39

EP 3 996 457 A1

# FIG. 1D

## FIG. 1E

succss —1e-00

UE —1e-01    gNB —1e-03

MsgA —1e-15

1e-11 — MsgA
Msg1 →
Msg3 →
1e-13 —

PDCCH with RA-RNTI for MsgB —1e-17

MsgB: Msg2+Msg4 —1e-19

MsgA —1e-25

| PRACH (Msg1: PRACH Preamble) | Gap | PUSCH (Msg3: Payload) |
|---|---|---|
| 1e-21 | 1e-22 | 1e-23 |

Time →

fallback —1e-50

UE —1e-51    gNB —1e-53

MsgA: PRACH Preamble —1e-61

MsgA: PUSCH
1e-63 ✕

1e-65 — Msg2

1e-71 — Msg3

1e-73 — Msg4

EP 3 996 457 A1

## FIG. 1F

**BI Subheader — 1f-01**

| T=00 | R | R | BI | Oct1 |

**MAC Subheader – Fallback — 1f-03**

| T=01 | RAPID | Oct1 |

**MAC MsgB – Fallback — 1f-05**

| TC-RNTI |
|---|
| TC-RNTI |
| TA Command |
| TA Command / UL grant |
| UL Grant |
| UL Grant |
| UL Grant / R |

**MAC Subheader – Padding — 1f-07**

| T=11 | R | R | R | R | R | R | Oct1 |

---

1f-21 — **MAC Subheader – Success (without RRC Message) — 1f-09**

| T=10 | PI=0 | R | R | R | R | R | Oct1 |

**MAC MsgB – Success (without RRC message) 1f-11**

| UE Contention Resolution Identity |
|---|
| UE Contention Resolution Identity |
| UE Contention Resolution Identity |
| UE Contention Resolution Identity |
| UE Contention Resolution Identity |
| UE Contention Resolution Identity |
| C-RNTI |
| C-RNTI |
| TA Command |
| TA Command / R / R / R / R |

---

**MAC Subheader – Success (without RRC Message) — 1f-13**

| T=10 | PI=0 | R | R | R | R | R | Oct1 |

| UE Contention Resolution Identity |
|---|
| UE Contention Resolution Identity |
| UE Contention Resolution Identity |
| UE Contention Resolution Identity |
| UE Contention Resolution Identity |
| UE Contention Resolution Identity |
| C-RNTI |
| C-RNTI |
| TA Command |
| TA Command / R / R / R / R |
| DL MAC PDU (variable) — 1f-25 |

**MAC MsgB – Success (with RRC message) — 1f-15**

---

| MAC subheader (T = 00) | MAC subheader (T = 01) | MAC Fallback MsgB | MAC subheader (T = 10) | MAC Success MsgB | MAC subheader (T = 11) | Padding |

| MAC subPDU 1 (BI only) | MAC subPDU 2 (Fallback Info) | MAC subPDU 3 (Success Info) | MAC subPDU 4 | · · · | MAC subPDU n |

**MsgB MAC PDU Format — 1f-17**

EP 3 996 457 A1

# FIG. 1G

BI Subheader — 1g-01

MAC Subheader – Success (without RRC Message) — 1g-09 (1g-21)

1g-25

MAC Subheader – Success (without RRC Message) — 1g-13

1g-27

MAC Subheader – Fallback — 1g-03

MAC MsgB – Fallback — 1g-05

MAC Subheader – Padding — 1g-07

MAC MsgB – Success (without RRC message) — 1g-11

MAC MsgB – Success (with RRC message) — 1g-15 (1g-31)

MsgB MAC PDU Format — 1g-17

FIG. 1H

# FIG. 1I

| T=00 | R | R | BI | Oct1 |

BI Subheader — 1i-01

| T=01 | RAPID | Oct1 |

MAC Subheader – Fallback — 1i-03

| TC-RNTI |
|---|
| TC-RNTI |
| TA Command |
| TA Command | UL grant |
| UL Grant |
| UL Grant |
| UL Grant | R |

MAC MsgB – Fallback — 1i-05

| T=11 | R | R | R | R | R | R | Oct1 |

MAC Subheader – Padding — 1i-07

| T=10 | PI=0 | R | R | R | R | R | Oct1 |

1h-21 MAC Subheader – Success
(without RRC Message) — 1i-09

| UE Contention Resolution Identity |
|---|
| UE Contention Resolution Identity |
| UE Contention Resolution Identity |
| UE Contention Resolution Identity |
| UE Contention Resolution Identity |
| UE Contention Resolution Identity |
| C-RNTI |
| C-RNTI |
| TA Command |
| TA Command | R | R | R | R |

MAC MsgB – Success (without RRC message)

1i-11

| T=10 | PI=1 | F | R | R | R | R | Oct1 |

| SDU Container Length (8 or 16) | 1i-23 |
| SDU Container Length (8 or 16) | 1i-25 |

MAC Subheader – Success
(without RRC Message) — 1i-13

| UE Contention Resolution Identity |
|---|
| UE Contention Resolution Identity |
| UE Contention Resolution Identity |
| UE Contention Resolution Identity |
| UE Contention Resolution Identity |
| UE Contention Resolution Identity |
| TC-RNTI |
| TC-RNTI |
| TA Command |
| TA Command | R | R | R | R |
| R | F | LCID |
| Length (8 or 16) |
| SDU 1 |
| R | F | LCID |
| Length (8 or 16) |
| SDU n |

MAC MsgB – Success (with RRC message) — 1i-15

| MAC subheader (T = 00) | MAC subheader (T = 01) | MAC Fallback MsgB | MAC subheader (T = 10) | MAC Success MsgB | MAC subheader (T = 11) | Padding |

| MAC subPDU 1 (BI only) | MAC subPDU 2 (Fallback Info) | MAC subPDU 3 (Success Info) | MAC subPDU 4 | . . . | MAC subPDU n |

MsgB MAC PDU Format — 1i-17

EP 3 996 457 A1

**FIG. 1J**

BI Subheader — 1j-01

| T=00 | R | R | BI | Oct1 |

MAC Subheader – Fallback — 1j-03

| T=01 | RAPID | Oct1 |

MAC MsgB – Fallback — 1j-05

TC-RNTI
TC-RNTI
TA Command
TA Command | UL grant
UL Grant
UL Grant
UL Grant | R

MAC Subheader – Padding — 1j-07

| T=11 | R | R | R | R | R | R | Oct1 |

MAC Subheader – Success (without RRC Message) — 1j-09

| T=10 | R | R | R | R | R | Oct1 |

MAC MsgB – Success (without RRC message) — 1j-11

UE Contention Resolution Identity
UE Contention Resolution Identity
UE Contention Resolution Identity
UE Contention Resolution Identity
UE Contention Resolution Identity
UE Contention Resolution Identity
C-RNTI
C-RNTI
TA Command
TA Command | Num SDUs = 0

MAC Subheader – Success (without RRC Message) — 1j-13

| T=0 | R | R | R | R | R | Oct1 |

UE Contention Resolution Identity
UE Contention Resolution Identity
UE Contention Resolution Identity
UE Contention Resolution Identity
UE Contention Resolution Identity
UE Contention Resolution Identity
C-RNTI
C-RNTI
TA Command
TA Command | Num SDUs = 0 — 1j-23
R | F | LCID
Length (8 or 16)
SDU 1
---
R | F | LCID
Length (8 or 16)
SDU n

MAC MsgB – Success (without RRC message) — 1j-15

| MAC subheader (T = 11) | Padding |

MAC subPDU n

MsgB MAC PDU Format — 1j-17

| MAC subheader (T = 00) | MAC Fallback MsgB | MAC subheader (T = 01) | MAC Fallback MsgB | ... | MAC subheader (T = 10) | MAC Success MsgB | MAC subheader (T = 11) |

| MAC subPDU 1 (BI only) | MAC subPDU 2 (Fallback Info) | MAC subPDU 3 (Fallback Info) | MAC subPDU 4 (Success Info) | ... |

# FIG. 1K

**BI Subheader — 1k-01**

| T=00 | R | R | BI | | Oct1 |

**MAC Subheader – Fallback — 1k-03**

| T=01 | RAPID | Oct1 |

**MAC MsgB – Fallback — 1k-05**

| TC-RNTI |
|---|
| TC-RNTI |
| TA Command |
| TA Command | UL grant |
| UL Grant |
| UL Grant |
| UL Grant | R |

**MAC Subheader – Padding — 1k-07**

| T=11 | R | R | R | R | R | R | Oct1 |

---

**MAC Subheader – Success (without RRC Message) — 1k-09**

| T=10 | R | R | R | R | R | R | Oct1 |

**MAC MsgB – Success (without RRC message) 1k-11**

| UE Contention Resolution Identity |
|---|
| UE Contention Resolution Identity |
| UE Contention Resolution Identity |
| UE Contention Resolution Identity |
| UE Contention Resolution Identity |
| UE Contention Resolution Identity |
| TC-RNTI |
| TC-RNTI |
| TA Command |

| TA Command | PI=1 | R | R | R |

1k-21

---

**MAC Subheader – Success (without RRC Message) — 1k-13**

| T=10 | R | R | R | R | R | R | Oct1 |

**MAC MsgB – Success (without RRC message) — 1k-15**

| UE Contention Resolution Identity |
|---|
| UE Contention Resolution Identity |
| UE Contention Resolution Identity |
| UE Contention Resolution Identity |
| UE Contention Resolution Identity |
| UE Contention Resolution Identity |
| TC-RNTI |
| TC-RNTI |
| TA Command — 1k-23 |

| TA Command | PI=1 | ST | R | R | — 1k-25 |

| F | Length (7 or 15) |
|---|---|
| Length (7 or 15) | |
| SDU 1 | |

| F | Length (7 or 15) |
|---|---|
| Length (7 or 15) | |
| SDU n | |

---

**MsgB MAC PDU Format — 1k-17**

| MAC subheader (T = 00) | MAC subheader (T = 01) | MAC Fallback MsgB | MAC subheader (T = 10) | MAC Success MsgB | MAC subheader (T = 11) | Padding |

| MAC subPDU 1 (BI only) | MAC subPDU 2 (Fallback Info) | MAC subPDU 3 (Success Info) | MAC subPDU 4 | · · · | MAC subPDU n |

EP 3 996 457 A1

FIG. 1L

| T=00 | R | R | BI | Oct1 |

BI Subheader — 1I-01

| T=01 | RAPID | Oct1 |

MAC Subheader – Fallback — 1I-03

| TC-RNTI |
| TC-RNTI |
| TA Command |
| TA Command | UL grant |
| UL Grant |
| UL Grant |
| UL Grant | R |

MAC MsgB – Fallback — 1I-05

| T=11 | R | R | R | R | R | R | Oct1 |

MAC Subheader – Padding — 1I-07

| T=10 | R | R | R | R | R | R | Oct1 |

MAC Subheader – Success
(without RRC Message) — 1I-09

| UE Contention Resolution Identity |
| UE Contention Resolution Identity |
| UE Contention Resolution Identity |
| UE Contention Resolution Identity |
| UE Contention Resolution Identity |
| UE Contention Resolution Identity |
| TC-RNTI |
| TC-RNTI |
| TA Command |
| TA Command | Num SDUs =0 | R | R |

MAC MsgB – Success (without RRC message)

1I-21    1I-11

| T=10 | R | R | R | R | R | R | Oct1 |

MAC Subheader – Success
(without RRC Message) — 1I-13

| UE Contention Resolution Identity |
| UE Contention Resolution Identity |
| UE Contention Resolution Identity |
| UE Contention Resolution Identity |
| UE Contention Resolution Identity |
| UE Contention Resolution Identity |
| TC-RNTI |
| TC-RNTI |
| TA Command | — 1I-23 |
| TA Command | Num SDUs =1/2 | ST | R |
| F | Length (7 or 15) | any |
| Length (7 or 15) |
| SDU 1 |
| F | Length (7 or 15) |
| Length (7 or 15) |
| SDU n |

MAC MsgB – Success (without RRC message) — 1I-15

| MAC subheader (T = 00) | MAC subheader (T = 01) | MAC Fallback MsgB | MAC subheader (T = 10) | MAC Success MsgB | MAC subheader (T = 11) | Padding |

| MAC subPDU 1 (BI only) | MAC subPDU 2 (Fallback Info) | MAC subPDU 3 (Success Info) | MAC subPDU 4 | . . . | MAC subPDU n |

MsgB MAC PDU Format — 1I-17

EP 3 996 457 A1

FIG. 1M

| T=00 | R | R | BI | Oct1 |

BI Subheader —1m-01

| T=10 | Num SDUs | R | R | R | R | Oct1 |

1m-21

MAC Subheader – Success —1m-09

| R | F | LCID |
| Length (8 or 16) | | |

MAC Subheader – SDU —1m-13

| T=01 | RAPID | Oct1 |

MAC Subheader – Fallback —1m-03

| TC-RNTI |
| TC-RNTI |
| TA Command |
| TA Command | UL grant |
| UL Grant |
| UL Grant |
| UL Grant | R |

MAC MsgB – Fallback —1m-05

| UE Contention Resolution Identity |
| UE Contention Resolution Identity |
| UE Contention Resolution Identity |
| UE Contention Resolution Identity |
| UE Contention Resolution Identity |
| UE Contention Resolution Identity |
| C-RNTI |
| C-RNTI |
| TA Command |
| TA Command | R | R | R | R |

MAC MsgB – Success —1m-11

| T=11 | R | R | R | R | R | R | Oct1 |

MAC Subheader – Padding —1m-07

| MAC subheader (T = 00) | MAC subheader (T = 01) | MAC Fallback MsgB | MAC subheader (T = 10) | MAC Success MsgB | MAC subheader (T = 10) | MAC Success MsgB | MAC subheader (T = 11) | Padding |

| MAC subPDU 1 (BI only) | MAC subPDU 2 (Fallback Info) | MAC subPDU 3 (Success Info) | MAC subPDU 4 (RRC Message) | . . . | MAC subPDU x (RRC Message) | . . . | | MAC subPDU n |

1m-23          1m-25

N MAC subPDU carrying RRC messages

MsgB MAC PDU Format —1m-17

EP 3 996 457 A1

# FIG. 1N

| T=00 | R | R | BI | Oct1 |

BI Subheader — 1n-01

1n-21

| T=10 | Num SDUs | ST | R | R | R | Oct1 |

MAC Subheader – Success — 1n-09

| F | Length (7 or 15) |

MAC Subheader – SDU — 1n-13

| T=01 | RAPID | Oct1 |

MAC Subheader – Fallback — 1n-03

| UE Contention Resolution Identity |
| UE Contention Resolution Identity |
| UE Contention Resolution Identity |
| UE Contention Resolution Identity |
| UE Contention Resolution Identity |
| UE Contention Resolution Identity |

ST: SRB Type

| TC-RNTI |
| TC-RNTI |
| TA Command |
| TA Command | UL grant |
| UL Grant |
| UL Grant |
| UL Grant | R |

MAC MsgB – Fallback — 1n-05

| C-RNTI |
| C-RNTI |
| TA Command |
| TA Command | R | R | R | R |

MAC MsgB – Success — 1n-11

| T=11 | R | R | R | R | R | R | Oct1 |

MAC Subheader – Padding — 1n-07

| MAC subheader (T = 00) | MAC subheader (T = 01) | MAC Fallback MsgB | MAC subheader (T = 10) | MAC Success MsgB | MAC subheader (F/L) | MAC SDU | MAC subheader (T=11) | Padding |

| MAC subPDU 1 (BI only) | MAC subPDU 2 (Fallback Info) | MAC subPDU 3 (Success Info) | MAC subPDU 4 (RRC Message) | . . . | MAC subPDU x (RRC Message) | . . . | MAC subPDU n |

N MAC subPDU carrying RRC messages

MsgB MAC PDU Format — 1n-17

## FIG. 10

**1o-21**

| T=00 | R | R | BI | Oct1 |

BI Subheader —1o-01

| T=10 | PI | R | R | R | R | R | Oct1 |

MAC Subheader – Success —1o-09

**1o-23**

| S | F | LCID |
| --- | --- | --- |
| Length (8 or 16) | | |

MAC Subheader – SDU —1o-13

| T=01 | RAPID | Oct1 |

MAC Subheader – Fallback —1o-03

| UE Contention Resolution Identity |
| --- |
| UE Contention Resolution Identity |
| UE Contention Resolution Identity |
| UE Contention Resolution Identity |
| UE Contention Resolution Identity |
| UE Contention Resolution Identity |

In case fallback is not supported via MsgB, instead of 2 bit T field,
1 bit T field and 1 bit E field can be added in subheader above.
T is set to 0 for BI and T is set to 1 for success subheader.
Padding subheader is not needed.

| TC-RNTI |
| --- |
| TC-RNTI |
| TA Command |

| TA Command | UL grant |
| --- | --- |

| UL Grant |
| --- |
| UL Grant |

| UL Grant | R |
| --- | --- |

MAC MsgB – Fallback —1o-05

| C-RNTI |
| --- |
| C-RNTI |
| TA Command |

| TA Command | R | R | R | R |
| --- | --- | --- | --- | --- |

MAC MsgB – Success —1o-11

| T=11 | R | R | R | R | R | R | Oct1 |

MAC Subheader – Padding —1o-07

| MAC subheader (T = 00) | MAC subheader (T = 01) | MAC Fallback MsgB | MAC subheader (T = 10) | MAC Success MsgB | MAC subheader (S/F/LCID/L) | MAC SDU | MAC subheader (T = 11) | Padding |

| MAC subPDU 1 (BI only) | MAC subPDU 2 (Fallback Info) | MAC subPDU 3 (Success Info) | MAC subPDU 4 (RRC Message) | . . . | MAC subPDU x (RRC Message) | . . . | MAC subPDU n |

MsgB MAC PDU Format —1o-17

All consecutive MAC subPDUs with RRC messages following the MAC subPDU with success info belongs to same UE

EP 3 996 457 A1

# FIG. 1P

**BI Subheader — 1o-01**

| T=00 | R | R | BI | Oct1 |

**MAC Subheader – Fallback — 1p-03**

| T=01 | RAPID | Oct1 |

**MAC MsgB – Fallback — 1p-05**

| TC-RNTI |
| TC-RNTI |
| TA Command |
| TA Command | UL grant |
| UL Grant |
| UL Grant |
| UL Grant | R |

**MAC Subheader – Padding — 1p-07**

| T=11 | R | R | R | R | R | R | Oct1 |

---

**MAC Subheader – Success — 1p-09**

| T=10 | PI | ST | R | R | R | R | Oct1 |

(1p-21, 1p-23)

**MAC MsgB – Success — 1p-11**

| UE Contention Resolution Identity |
| UE Contention Resolution Identity |
| UE Contention Resolution Identity |
| UE Contention Resolution Identity |
| UE Contention Resolution Identity |
| UE Contention Resolution Identity |
| C-RNTI |
| C-RNTI |
| TA Command |
| TA Command | R | R | R | R |

---

**MAC Subheader – SDU — 1p-13**

(1p-25, 1p-27)

| S | F | Length (6 or 14) |
| Length (6 or 14) | | |

---

**MsgB MAC PDU Format — 1p-17**

| MAC subheader (T = 00) | MAC subheader (T = 01) | MAC Fallback MsgB | MAC subheader (T = 10) | MAC Success MsgB | MAC subheader (S/F/LCID/L) | MAC SDU | MAC subheader (T = 11) | Padding |

| MAC subPDU 1 (BI only) | MAC subPDU 2 (Fallback Info) | MAC subPDU 3 (Success Info) | MAC subPDU 4 (RRC Message) | . . . | MAC subPDU x (RRC Message) | . . . | MAC subPDU n |

All consecutive MAC subPDUs with RRC messages following the MAC subPDU with success info belongs to same UE

EP 3 996 457 A1

# FIG. 1Q

MAC Subheader – MAC MsgB ── 1q-01

MAC Subheader – SDU ── 1q-05

| R | F | LCID |
|---|---|------|
| Length (8 or 16) | | |

## MAC MsgB ── 1q-03

| UE Contention Resolution Identity |
|---|
| UE Contention Resolution Identity |
| UE Contention Resolution Identity |
| UE Contention Resolution Identity |
| UE Contention Resolution Identity |
| UE Contention Resolution Identity |
| C-RNTI |
| C-RNTI |
| TA Command |

| TA Command | R | R | R | R |
|---|---|---|---|---|

X MAC subPDU carrying MAC SDU

MsgB MAC PDU Format ── 1q-17

MAC subPDU for MsgB indicates number of MAC SDU (say N).
The next 'N' MAC subPDUs following this MAC subPDU carries MAC SDU

EP 3 996 457 A1

# FIG. 1R

MAC Subheader – MAC MsgB — 1r-01

| E | PI | R | R | R | R | R | R | Oct1 |

1r-21  1r-23

MAC Subheader – SDU — 1r-05

1r-25

| S | F | LCID |
|---|---|------|
| Length (8 or 16) | | |

S bit is set to 1 if the next MAC subPDU carries MAC SDU. Otherwise it is set to 0

PI bit is set to 1 there are one or more MAC subPDUs carrying MAC SDU after this MAC subPDU

E bit indicates if this is the last MAC subPDU carrrying MsgB or not

MAC MsgB — 1r-03

| UE Contention Resolution Identity |
|---|
| UE Contention Resolution Identity |
| UE Contention Resolution Identity |
| UE Contention Resolution Identity |
| UE Contention Resolution Identity |
| UE Contention Resolution Identity |
| C–RNTI |
| C–RNTI |
| TA Command |

| TA Command | R | R | R | R |

| MAC subheader (E/N/R/R/R/R) | MAC MsgB |
|---|---|

| MAC subheader (R/F/LCID/L) | MAC SDU |
|---|---|

| MAC subPDU 1 (MAC MsgB) | MAC subPDU 2 (MAC SDU) | . . . | MAC subPDU 2+X-1 (MAC SDU) | Padding (opt) |

◄——— X MAC subPDU carrying MAC SDU ———►

MsgB MAC PDU Format — 1r-17

MAC subPDU for MsgB indicates number of MAC SDU (say N).
The next 'N' MAC subPDUs following this MAC subPDU carries MAC SDU

EP 3 996 457 A1

# FIG. 1S

| TAG ID | Timing Advance Command | Oct 1 |

1s-01                    1s-03
FORMAT 1 —— 1s-05

1s-11                              1s-13

| TAG ID | Timing Advance Command | | | Oct 1 |
| Timing Advance Command | | R | R | Oct 1 |

1s-03

FORMAT 2 —— 1s-15

1s-23

| Timing Advance Command | | | | | Oct 1 |
| Timing Advance Command | R | R | R | R | Oct 2 |

1s-23

FORMAT 3 —— 1s-25

# FIG. 1T

# FIG. 1U

RF PROCESSOR 1u-10

BASEBAND PROCESSOR 1u-20

CONTROLLER 1u-50

MULTIPLE CONNECTION PROCESSOR 1u-52

COMMUNICATOR 1u-30

STORAGE 1u-40

EP 3 996 457 A1

FIG. 1V

1v-21    1v-23

| E | Type (x bits) | R | Oct1 |

MAC Subheader – MAC MsgB — 1v-01

1r-25

| R | F | LCID |
| Length (8 or 16 bits) | | |

MAC Subheader – SDU—1v-05

| UE Contention Resolution Identity |
| UE Contention Resolution Identity |
| UE Contention Resolution Identity |
| UE Contention Resolution Identity |
| UE Contention Resolution Identity |
| UE Contention Resolution Identity |
| C-RNTI |
| C-RNTI |
| TA Command |
| TA Command | R | R | R | R |

MAC MsgB — 1v-03

| MAC subheader (E/N/R/R/R/R/R) | MAC MsgB |

| MAC subheader (R/F/LCID/L) | MAC SDU |

| MAC subPDU 1 (MAC MsgB) | MAC subPDU 2 (MAC SDU) | . . . | MAC subPDU 2+X-1 (MAC SDU) | Padding (opt) |

X MAC subPDU carrying MAC SDU

MsgB MAC PDU Format —1v-17

MAC subPDU for MsgB indicates number of MAC SDU (say N).
The next 'N' MAC subPDUs following this MAC subPDU carries MAC SDU

EP 3 996 457 A1

## INTERNATIONAL SEARCH REPORT

| International application No. |
| --- |
| **PCT/KR2020/009808** |

**A.    CLASSIFICATION OF SUBJECT MATTER**

H04W 74/00(2009.01)i; H04W 74/08(2009.01)i; H04L 1/00(2006.01)i

According to International Patent Classification (IPC) or to both national classification and IPC

**B.    FIELDS SEARCHED**

Minimum documentation searched (classification system followed by classification symbols)

H04W 74/00; H04W 74/08; H04W 76/10; H04L 1/00

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 2단계 랜덤 액세스(2-step random access), 4단계 랜덤 액세스(4-step random access), 파라미터(parameter), 설정 정보(configuration information)

**C.    DOCUMENTS CONSIDERED TO BE RELEVANT**

| Category* | Citation of document, with indication, where appropriate, of the relevant passages | Relevant to claim No. |
| --- | --- | --- |
| X<br><br>Y | HUAWEI et al. RACH type switching between 2-steps, 4-steps RACH and CFRA. R2-1904112, 3GPP TSG-RAN WG2 Meeting #105bis. Xian, China. 29 March 2019. See sections 3 and 3.1. | 1,8,14-15<br><br>2-7,9-13 |
| Y | ERICSSON. Power control of msgA PUSCH transmissions. R1-1907183, 3GPP TSG-RAN WG1 Meeting #97. Reno, USA. 04 May 2019. See section 2.7. | 2,9 |
| Y | ZTE et al. MsgB content and format. R2-1906306, 3GPP TSG-RAN WG2 Meeting #106. Reno, USA. 02 May 2019. See sections 2.1-2.2; and figure 3. | 3-7,10-13 |
| Y | LG ELECTRONICS INC. Considerations on msgB design. R2-1906577, 3GPP TSG -RAN WG2 Meeting #106. Reno, USA. 03 May 2019. See section 2. | 4-5,7,11,13 |
| A | WO 2018-127502 A1 (SONY CORPORATION et al.) 12 July 2018. See page 5, line 25 - page 11, line 23; and figures 2-8. | 1-15 |

☐ Further documents are listed in the continuation of Box C.          ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **24 October 2020** | **26 October 2020** |

| Name and mailing address of the ISA/KR | Authorized officer |
| --- | --- |
| **Korean Intellectual Property Office**<br>**Government Complex Daejeon Building 4, 189, Cheongsa-ro, Seo-gu, Daejeon, Republic of Korea**<br>**35208** | |
| Facsimile No. **+82-42-481-8578** | Telephone No. |

Form PCT/ISA/210 (second sheet) (July 2019)

**INTERNATIONAL SEARCH REPORT**
Information on patent family members

International application No.

**PCT/KR2020/009808**

| Patent document cited in search report | | | Publication date (day/month/year) | Patent family member(s) | | | Publication date (day/month/year) |
|---|---|---|---|---|---|---|---|
| WO | 2018-127502 | A1 | 12 July 2018 | CN | 110140409 | A | 16 August 2019 |
| | | | | EP | 3549384 | A1 | 09 October 2019 |
| | | | | US | 2019-0380154 | A1 | 12 December 2019 |

Form PCT/ISA/210 (patent family annex) (July 2019)